(19) **Europäisches Patentamt / European Patent Office / Office européen des brevets**

(11) **EP 3 842 302 B1**

(12) **EUROPEAN PATENT SPECIFICATION**

(45) Date of publication and mention of the grant of the patent:
**10.05.2023 Bulletin 2023/19**

(21) Application number: **19852942.2**

(22) Date of filing: **21.05.2019**

(51) International Patent Classification (IPC):
*B60W 20/19* (2016.01)  *B60K 6/485* (2007.10)
*B60K 6/543* (2007.10)  *B60W 10/06* (2006.01)
*B60W 10/08* (2006.01)  *B60W 10/10* (2012.01)
*B60W 10/26* (2006.01)  *B60W 20/30* (2016.01)
*F02D 29/00* (2006.01)  *F02D 29/06* (2006.01)
*F02D 41/10* (2006.01)  *F02D 43/00* (2006.01)
*F02D 45/00* (2006.01)  *F16H 61/02* (2006.01)
*F16H 61/662* (2006.01)

(52) Cooperative Patent Classification (CPC):
**F02D 29/02; B60K 6/485; B60K 6/543;
B60W 10/06; B60W 10/08; B60W 10/107;
B60W 20/11; F02B 61/02; F02D 41/0215;
F02D 41/10; F16H 59/50; F16H 61/0213;
F16H 61/66259;** B60W 2300/365; B60W 2510/244;

(Cont.)

(86) International application number:
**PCT/JP2019/020064**

(87) International publication number:
**WO 2020/039670 (27.02.2020 Gazette 2020/09)**

(54) **STRADDLED VEHICLE**

GRÄTSCHSITZFAHRZEUG

VÉHICULE À SELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2018 JP 2018156013**

(43) Date of publication of application:
**30.06.2021 Bulletin 2021/26**

(73) Proprietor: **Yamaha Hatsudoki Kabushiki Kaisha Iwata-shi, Shizuoka 438-8501 (JP)**

(72) Inventors:
• **NOGUCHI, Jun**
**Iwata-shi, Shizuoka 438-8501 (JP)**
• **ISHIMARU, Taiga**
**Iwata-shi, Shizuoka 438-8501 (JP)**

(74) Representative: **Grünecker Patent- und Rechtsanwälte
PartG mbB
Leopoldstraße 4
80802 München (DE)**

(56) References cited:
**WO-A1-2017/135315      JP-A- 2008 189 243
JP-A- 2017 171 126**

(52) Cooperative Patent Classification (CPC): (Cont.)
B60W 2540/10; B60W 2556/10; B60W 2710/0605;
B60W 2710/0666; B60W 2710/083;
B60W 2710/1005; B60Y 2200/12; B60Y 2200/92;
B60Y 2400/112; F02D 2200/503; F02D 2250/18;
F16H 61/662; F16H 2061/0234; Y02T 10/62

**Description**

The present invention relates to a straddled vehicle according to the preamble of independent claim 1. Such a straddled vehicle can be taken from the prior art document WO 2017/135315 A1.

Patent Literature (PTL) 1, for example, discloses a motorcycle as a straddled vehicle. The motorcycle includes an engine and a drive motor. The drive motor is able to assist with engine running during starting and acceleration of the motorcycle. For example, power from the drive motor and rotative power of a crankshaft produced by a reciprocating motion of a piston in the engine are transmitted to a starting clutch, a continuously variable transmission, and the like. The resulting power therefrom drives a rear wheel.

Citation List

Patent Literature

PTL 1: Japanese Patent No. 4270460

In the straddled vehicle disclosed in PTL 1, as described above, the motor assists with engine running. Addition of the power outputted by the motor to the power outputted by the engine improves acceleration responsiveness of the vehicle to accelerating manipulation.

The motor outputs power by receiving electric power supplied from a battery. The running assist ability of the motor is therefore susceptible to the influence of a charge state of the battery.

A straddled vehicle adopting acceleration assist by a motor is desired to have reproducible acceleration responsiveness to accelerating manipulation regardless of the charge state of the battery.

An objective of the present invention is to provide a straddled vehicle having reproducible vehicle acceleration responsiveness to accelerating manipulation regardless of a charge state of a battery.

According to the present invention said object is solved by a straddled vehicle having the features of independent claim 1. Preferred embodiments are laid down in the dependent claims.

The present inventors studied acceleration assist by a motor and acceleration responsiveness to manipulation in detail. As a result, the present inventors found the following.

A motor for improving the acceleration responsiveness receives electric power supplied from a battery. Power to be outputted by the motor therefore decreases with a decrease in the electric power in the battery. As a result, the effect of improving the acceleration responsiveness decreases.

In the case of a straddled vehicle including an electrically-driven transmission device, a possible solution is to change the transmission gear ratio of the electrically-driven transmission device according to the accelerating manipulation.

For example, in a situation where accelerating manipulation is performed for increasing the target power (target crankshaft power, which in other words is the target sum of a power from the engine and a power from the motor), a control device mounted in the vehicle detects a state of charge of the battery. If the electric power in the battery is less than a reference value, the control device does not add any power from the motor. The control device increases the engine power by increasing opening of a throttle valve, and thus increasing the supply of gas toward achieving the target power. In a situation where it is impossible to achieve the target power only by increasing opening of the throttle valve (whereby the throttle is valve open to its fullest), the control device changes the transmission gear ratio (increases the transmission gear ratio; increases the engine rotation speed) to achieve the target power. Kick-down may be mentioned as an example of changing the transmission gear ratio.

According to the above-described way to change the transmission gear ratio by detecting the state of charge of the battery in response to accelerating manipulation, the power that is eventually outputted by the engine increases even if the state of charge of the battery is lower than the predetermined reference value. Such an increase in the power is to satisfy an acceleration demand in, for example, a four-wheel automobile.

However, increasing the crankshaft power by increasing the rotation speed is accompanied by a large lag time due to influences of time required for gear shifting by the transmission and an inertia torque loss during the increase of the rotation speed, compared to increasing the engine power and the motor power.

In the case of the straddled vehicle, higher acceleration responsiveness is desired in some situations.

The straddled vehicle leans toward the center of curvature of a corner when turning the corner. The straddled vehicle turning a corner while leaning returns, for example, from a leaning state to an upright state by increasing centrifugal force acting on the position of the center of gravity of the vehicle through acceleration. The straddled vehicle is desired to have high responsiveness to accelerating manipulation compared to, for example, an automobile that does not lean toward the center of curvature of a corner when turning the corner.

The present inventors concluded that temporal response for the crankshaft power desired by the straddled vehicle would be achieved by mainly increasing the engine power and the motor power.

The present inventors studied acceleration assist by a motor and acceleration responsiveness to manipulation in greater detail. In the course of the study, the present inventors studied control to change the transmission gear ratio of an electrically-driven transmission device to increase the rotation speed of a crankshaft prior to accelerating manipulation. Specifically, a control device changes the transmission gear ratio to increase the rotation speed of the crankshaft depending on the amount of decrease from a full-charge electric power capacity. In this case, the transmission gear ratio is increased.

Here, in an engine, a difference between an engine power with a certain degree of throttle opening and an engine power with a full throttle opening at the same rotation speed is referred to as a power margin. The power margin means a spare power by which the engine power can be increased instantly.

Comparing a condition of a low rotation speed and a high load (a high degree of throttle opening), and a condition of a high rotation speed and a low load (a low degree of throttle opening), the latter of the two conditions results in a greater power margin than the former even if the engine power is the same. The engine power that can be instantly outputted is therefore greater under the latter condition than under the former condition.

The above-described control enables output of a target power without waiting for the rotation speed of the crankshaft to increase even if electric power in the battery has decreased. This allows a vehicle to have reproducible acceleration responsiveness to accelerating manipulation.

A straddled vehicle according to the present invention accomplished based on the findings described above has the following configurations.

(1) A straddled vehicle including:

an engine having a rotatable crankshaft and configured to output power generated through gas combustion as a torque and a rotation speed of the crankshaft;
a drive wheel configured to be driven by the power outputted by the engine;
a throttle valve configured to be controlled to increase a volume of gas being supplied to the engine according to accelerating manipulation by a rider of the straddled vehicle;
a generator motor configured to operate in cohesion with the crankshaft, generate electric power by being driven by the engine, and drive the engine by being supplied with electric power;
a battery configured to store the electric power generated by the generator motor when the generator motor is driven by the engine and supply the generator motor with the electric power stored therein when the engine is driven by the generator motor;
an electrically-driven transmission device configured to change the rotation speed of the crankshaft at set transmission gear ratios and to transmit the rotation speed to the drive wheel;
a control device configured to control the generator motor and the electrically-driven transmission device, wherein the control device changes, prior to the accelerating manipulation, the transmission gear ratio of the electrically-driven transmission device depending at least on an amount of decrease in the electric power stored in the battery from a full-charge capacity thereof so as to enable the generator motor driven by the electric power stored in the battery and/or the engine to output, in response to the accelerating manipulation, a target power according to the accelerating manipulation from the crankshaft regardless of an amount of charge remaining in the battery.

The straddled vehicle described in (1) includes an engine, a drive wheel, a throttle valve, a generator motor, a battery, an electrically-driven transmission device, and a control device. The engine has a rotatable crankshaft. The engine outputs power generated through gas combustion as a torque and a rotation speed of the crankshaft. The drive wheel is driven by the power outputted by the engine. The throttle valve is controlled to increase a volume of gas being supplied to the engine according to accelerating manipulation by a rider of the straddled vehicle.

The generator motor operates in cohesion with the crankshaft. The generator motor generates electric power by being driven by the engine. The generator motor also drives the engine by being supplied with electric power. The battery stores the electric power generated by the generator motor when the generator motor is driven by the engine. The battery also supplies the generator motor with the electric power stored therein when the engine is driven by the generator motor.

The electrically-driven transmission device changes the rotation speed of the crankshaft at set transmission gear ratios and transmits the rotation speed to the drive wheel.

The control device controls the generator motor and the electrically-driven transmission device. The control device changes, prior to the accelerating manipulation, the transmission gear ratio of the electrically-driven transmission device depending at least on the amount of decrease from a full-charge capacity of the battery.

The control device changes, prior to the accelerating manipulation, the transmission gear ratio to enable the generator motor and/or the engine to output, in response to the accelerating manipulation, a target power according to the accelerating manipulation from the crankshaft regardless of the amount of charge remaining in the battery. Specifically, the control device constantly controls the transmission gear ratio so that the power being outputted from the crankshaft by the generator motor and/or the engine reaches a preset target value upon the rider demanding maximum driving (manipulating a throttle grip into a wide-open-throttle position). The control device changes a power margin by changing the transmission gear ratio. The power margin is a difference between a power outputted by the engine at a point in time prior to the accelerating manipulation and a maximum power producible by the engine at a rotation speed at the point in time prior to the accelerating manipulation.

In a situation where the amount of electric power stored in the battery is less than the full-charge capacity, for example, increasing the transmission gear ratio prior to the accelerating manipulation increases the rotation speed of the crankshaft, and thus increases the power margin. It is therefore possible to inhibit a reduction in acceleration responsiveness of the vehicle to accelerating manipulation even in a situation where the amount of electric power stored in the battery is less than the full-charge capacity.

As long as the amount of decrease in the battery is small, it is possible to add power by means of the motor. In this case, the increase in the power margin as a result of changing the transmission gear ratio is smaller than a case where the amount of decrease in the battery is large.

Thus, the straddled vehicle described in (1) has reproducible vehicle acceleration responsiveness to accelerating manipulation regardless of the charge state of the battery.

(2) The straddled vehicle according to (1), wherein the control device increases a power margin by changing, prior to the accelerating manipulation, the transmission gear ratio of the electrically-driven transmission device depending at least on the amount of decrease in the electric power stored in the battery from the full-charge capacity thereof, the power margin being a difference between a power outputted by the engine at a point in time prior to the accelerating manipulation and a maximum power producible by the engine at a rotation speed at that same point in time.

According to the configuration described in (2), the vehicle has high acceleration responsiveness to accelerating manipulation regardless of the charge state of the battery.

(3) The straddled vehicle according to (1) or (2), wherein the control device controls the electrically-driven transmission device so that an amount of change in the rotation speed of the crankshaft from a point in time of the accelerating manipulation to a point in time when the rotation speed of the crankshaft increases to reach a specific reference speed decreases depending on the amount on decrease in the electric power stored in the battery relative to the full-charge capacity.

According to the configuration described in (3), the amount of change in the rotation speed of the crankshaft from the point in time of the accelerating manipulation to the point in time when the rotation speed of the crankshaft reaches the specific reference speed is small. Accordingly, power consumption by inertia torque accompanying the increase in the rotation speed of the crankshaft decreases depending on the amount on decrease in the electric power stored in the battery relative to the full-charge capacity. Targeted acceleration responsiveness to accelerating manipulation is therefore maintained.

(4) The straddled vehicle according to any one of (1) to (3), wherein the control device controls, prior to the accelerating manipulation, the transmission gear ratio of the electrically-driven transmission device depending on the amount of decrease in the electric power stored in the battery from the full-charge capacity so that a sum of the power margin of the engine at the rotation speed at the point in time prior to the accelerating manipulation and a power producible by the generator motor depending on the amount of decrease from the full-charge capacity of the battery is constant with a target value set depending on a degree of opening of the throttle valve and a speed of the straddled vehicle.

According to the configuration described in (4), for example, the sum of the power margin of the engine and the power producible by the generator motor is maintained at a target value even if the amount of decrease from the full-charge capacity of the battery varies. The acceleration responsiveness is therefore prevented from becoming less reproducible due to a variation in the electric power stored in the battery.

The term "engine" includes, for example, a single-cylinder engine and an engine including two or more cylinders.

The term "electrically-driven transmission device" means a transmission device whose transmission gear ratio is controlled through electrical control. The electrically-driven transmission device is, for example, an electro continuously variable transmission (ECVT). The electrically-driven transmission device may be, for example, an electronically controlled multistage transmission.

The term "transmission gear ratio" means a ratio of input shaft rotation speed to output shaft rotation speed of the transmission device. Under the same drive wheel rotation speed condition, for example, the rotation speed of the crankshaft increases with an increase in the transmission gear ratio. Furthermore, under the same crankshaft rotation speed condition, the rotation speed of the drive wheel decreases with an increase in the transmission gear ratio.

The term "accelerating manipulation" means manipulation for accelerating the straddled vehicle. The accelerating manipulation is, for example, manipulation of an acceleration operator for acceleration. The acceleration operator is, for example, a throttle grip. The accelerating manipulation is manipulation for increasing the degree of opening of the throttle valve. The accelerating manipulation is, for example, manipulation for making the throttle valve wide open. However, the accelerating manipulation may be manipulation for opening the throttle valve into a state having a smaller degree of opening than a wide-open state.

Upon accelerating manipulation, the driving by the generator motor starts in response to the accelerating manipulation. However, it may also be acceptable that in some cases, the driving by the generator motor does not start despite the accelerating manipulation.

The vehicle having "reproducible" acceleration responsiveness to accelerating manipulation means the vehicle having less variable acceleration responsiveness to accelerating manipulation. The reproducibility of the acceleration responsiveness of the vehicle is measured as the time the acceleration rate takes to increase to a predetermined level in response to accelerating manipulation or as the amount of increase in the acceleration rate. The reproducibility of the acceleration responsiveness of the vehicle may be measured, for example, as the time the acceleration rate of the crankshaft takes to increase to a predetermined level or as the amount of increase in the acceleration rate.

The term "generator motor" means a rotary electric machine capable of both electric power generation and motor operation. The generator motor is, for example, a starter generator for starting the engine. The generator motor may be an electric motor provided separately from a starter motor. The generator motor may be of outer rotor type or of inner rotor type. Furthermore, the generator motor may be of axial gap type instead of being of radial gap type.

The term "straddled vehicle" means a type of vehicle in which a driver straddles a saddle when seated. Examples of straddled vehicles include scooters, mopeds, off-road motorcycles, and on-road motorcycles. The straddled vehicle is not limited to motorcycles and may be, for example, a three-wheeled vehicle. The three-wheeled vehicle may include two front wheels and one rear wheel or may include one front wheel and two rear wheels.

The drive wheel may be a rear wheel or a front wheel. The drive wheel may be both of the rear wheel and the front wheel.

Advantageous Effects of Invention

According to the present invention, it is possible to provide a straddled vehicle having reproducible vehicle acceleration responsiveness to accelerating manipulation regardless of a charge state of a battery.

Brief Description of Drawings

[FIG. 1] An external view of a vehicle according to an embodiment of the present invention and flowcharts illustrating operations of a control device in the vehicle.

[FIG. 2] A schematic diagram illustrating relations among main components of the vehicle 1 illustrated in FIG. 1.

[FIG. 3] A diagram illustrating a relation between engine rotation speed and engine torque of the vehicle 1 illustrated in FIG. 1.

[FIG. 4] A flowchart for explaining an operation of the control device in the vehicle 1 illustrated in FIG. 1.

[FIG. 5] A diagram illustrating a relation between rate of charge of a battery and maximum power producible by a generator motor.

[FIG. 6] A diagram illustrating a relation between crankshaft rotation speed and crankshaft torque of the vehicle 1 illustrated in FIG. 1.

[FIG. 7] A flowchart for explaining an operation of the control device in the vehicle 1 illustrated in FIG. 1 upon an acceleration instruction from a rider.

[FIG. 8] A diagram illustrating a relation between crankshaft rotation speed and crankshaft torque of the vehicle 1 illustrated in FIG. 1.

[FIG. 9] A diagram for explaining transitions of crankshaft rotation speed and crankshaft torque of the vehicle 1 illustrated in FIG. 1.

[FIG. 10] A diagram illustrating a relation between time and crankshaft power, engine power, and generator motor power of the vehicle 1 illustrated in FIG. 1 together with that of a comparative example.

[FIG. 11] A diagram illustrating a relation between time and crankshaft rotation speed of the vehicle 1 illustrated in FIG. 1 together with that of the comparative example.

[FIG. 12] A diagram illustrating a relation between time and crankshaft power, engine power, and generator motor power of the vehicle 1 illustrated in FIG. 1 together with that of another comparative example.

Description of Embodiments

The following describes the present invention based on some preferred embodiments with reference to the drawings.

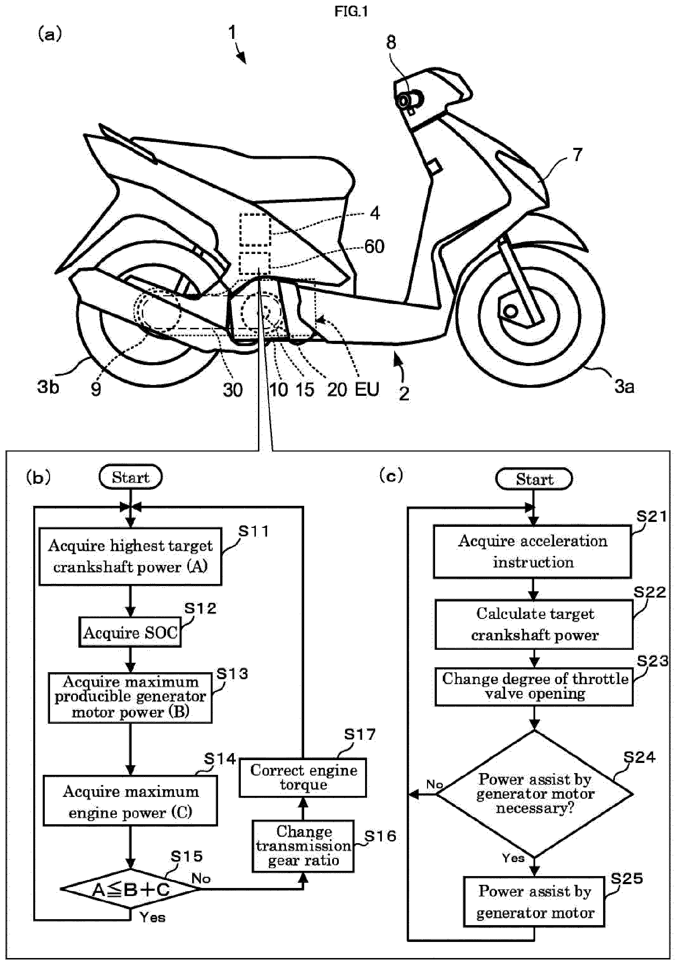

FIG. 1 is an external view of a vehicle according to an embodiment of the present invention and flowcharts illustrating operations of a control device in the vehicle.

An overview of the vehicle according to the present embodiment will be described with reference to FIG. 1.

A vehicle 1 illustrated in FIG. 1 includes a vehicle body 2, and a front wheel 3a and a rear wheel 3b rotatably attached to the vehicle body 2. The vehicle 1 is, for example, a straddled vehicle. More specifically, the vehicle 1 is, for example, a motorcycle. The vehicle 1 includes an engine unit EU, a battery 4, and a clutch 9.

The engine unit EU is mounted in the vehicle body 2, and includes an engine 10, a generator motor 20, an electrically-driven transmission device 30, and a control device 60. The vehicle 1 is driven by the engine 10. The vehicle 1 is further driven by the generator motor 20 as necessary. Specifically, the vehicle 1 is driven through the rear wheel 3b receiving rotational power of the engine 10 and the generator motor 20 via the electrically-driven transmission device 30 and the clutch 9. The rear wheel 3b is a drive wheel.

The engine 10 has a rotatable crankshaft 15. The engine 10 outputs power generated through gas combustion as a torque and a rotation speed of the crankshaft 15.

The generator motor 20 is provided so as to operate in cohesion with the crankshaft 15. The generator motor 20 generates electric power by being driven by the engine 10. The generator motor 20 also drives the engine 10 by being supplied with electric power.

The electrically-driven transmission device 30 changes the rotation speed of the crankshaft 15 at set transmission gear ratios and supplies the rotation speed to the rear wheel 3b.

The battery 4 stores therein electric power generated by the generator motor 20 when the engine 10 drives the generator motor 20. The battery 4 supplies the electric power stored therein to the generator motor 20 when the generator motor 20 drives the engine 10.

The clutch 9 switches between a transmission state in which rotational power of the crankshaft 15 is transmitted to the rear wheel 3b and a disconnection state in which the rotational power of the crankshaft 15 is blocked. The clutch 9 is, for example, a centrifugal clutch.

The control device 60 controls the engine 10, the generator motor 20, and the electrically-driven transmission device 30. Specifically, the control device 60 is configured to perform an operation illustrated in a part (b) of FIG. 1 and an operation illustrated in a part (c) of FIG. 1. The part (b) of FIG. 1 illustrates control to change the transmission gear ratio of the electrically-driven transmission device 30 depending on the amount of decrease from a full-charge capacity of the battery storing electric power. The part (c) of FIG. 1 illustrates control to increase the power from the engine 10 and the power from the generator motor 20 when accelerating manipulation is performed. The control device 60 is able to change the transmission gear ratio of the electrically-driven transmission device 30 depending at least on the amount of decrease from the full-charge capacity of the battery 4 storing electric power (step S16 in the part (b) of FIG. 1) prior to an acceleration instruction from a rider (step S21) shown in the part (c) of FIG. 1. As a result, the rotation speed of the crankshaft 15 is changed and the power margin of the engine 10 is changed. The power margin of the engine 10 is a difference between a power outputted by the engine 10 at a point in time prior to accelerating manipulation in the vehicle 1 and a maximum power producible by the engine 10 with a throttle valve 17a wide open at a rotation speed at the point in time prior to the accelerating manipulation. Thus, it is possible to increase, in response to accelerating manipulation by the rider, the power being outputted from the crankshaft 15 (crankshaft power) by the generator motor 20 and/or the engine 10 to a target power according to the accelerating manipulation by the rider, regardless of the amount of decrease from the full-charge capacity of the battery 4. As a result, the crankshaft power being outputted by the generator motor 20 and/or the engine 10 reaches the target power within a short period of time in response to the accelerating manipulation by the rider even if the state of charge of the battery 4 is low. Specifically, the crankshaft power being outputted by the generator motor 20 and/or the engine 10 reaches the target power within a shorter period of time than in a situation where the transmission gear ratio is not changed prior to the accelerating manipulation, for example. The vehicle therefore has highly reproducible acceleration responsiveness to accelerating manipulation regardless of the charge state of the battery.

Details of the operations illustrated in the parts (b) and (c) of FIG. 1 will be described later.

The vehicle 1 includes a headlight 7 and a throttle grip 8.

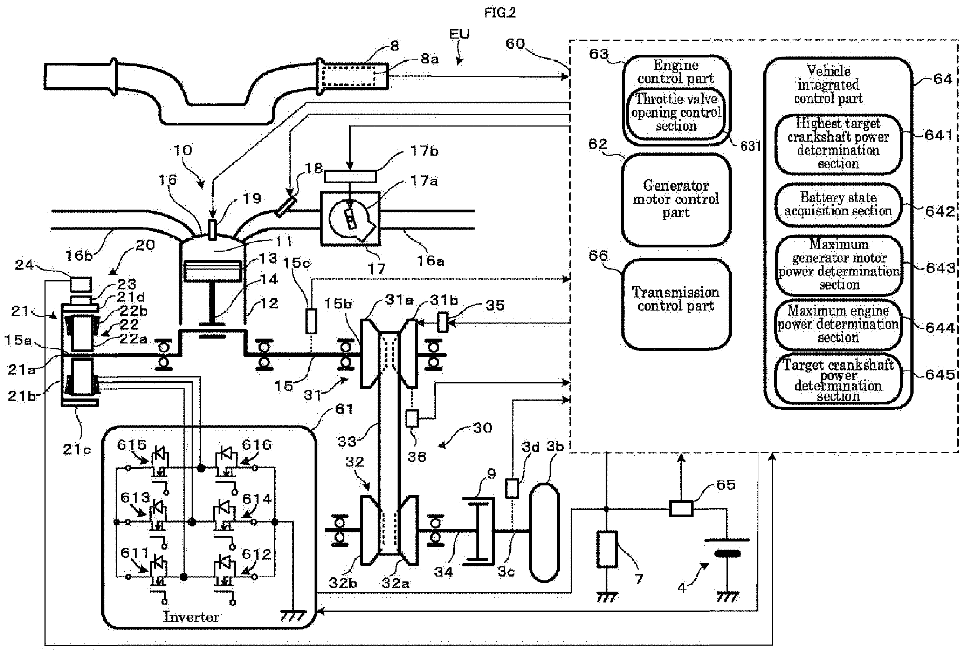

The throttle grip 8 is an acceleration operator for the rider to use to instruct acceleration of the vehicle 1. The control device 60 performs electronic control of the throttle valve 17a (see FIG. 2), a fuel injector device 18 (see FIG. 2) included in the engine 10, and the generator motor 20 based on the amount of manipulation of the throttle grip 8. Specifically, the control device 60 adjusts the throttle valve 17a so as to increase the volume of gas being supplied to the engine 10 and adjusts the electric power being supplied from the battery 4 to the generator motor 20, based on accelerating manipulation of the throttle grip 8 performed by the rider of the vehicle 1.

FIG. 2 is a schematic diagram illustrating relations among main components of the vehicle 1 illustrated in FIG. 1.

The throttle grip 8 is provided with a throttle sensor 8a. The throttle sensor 8a detects the amount of manipulation of the throttle grip 8 performed by the rider. The throttle sensor 8a is, for example, a potentiometer provided on the throttle grip 8. The throttle sensor 8a outputs a signal corresponding to the amount of manipulation of the throttle grip 8 performed by the rider. The control device 60 detects the amount of manipulation of the throttle grip 8 performed by the rider based on the signal outputted by the throttle sensor 8a.

The engine unit EU includes the engine 10. The engine 10 includes a cylinder 12, a piston 13, a connecting rod 14, and the crankshaft 15. A cylinder head 16 is provided in an upper portion of the cylinder 12. The cylinder 12, the piston 13, and the cylinder head 16 form a combustion chamber 11 of the engine 10.

The cylinder head 16 of the engine 10 has an intake tube 16a and an exhaust tube 16b. The intake tube 16a is provided with a throttle body 17 and the fuel injector device 18.

The throttle valve 17a is disposed inside the throttle body 17. The throttle valve 17a adjusts the volume of air flowing through the throttle body 17. The air that has passed the throttle valve 17a is supplied to the combustion chamber 11. The throttle valve 17a is an electronically controlled throttle. The throttle body 17 is provided with a throttle actuator 17b that opens and closes the throttle valve 17a. The throttle actuator 17b includes a motor that operates according to a signal supplied from the control device 60. The control device 60 controls the degree of throttle opening by transmitting a signal to the motor of the throttle actuator 17b, and thus causing the throttle valve 17a to be opened and closed.

The fuel injector device 18 injects fuel in a fuel tank (not shown) into the intake tube 16a, so that the air supplied to the combustion chamber 11 is mixed with the fuel. The fuel injector device 18 is electronically controlled. The volume of the fuel to be injected by the fuel injector device 18 is controlled by the control device 60.

Through adjustment of the degree of opening thereof, the throttle valve 17a adjusts the volume of the air mixed with the fuel, adjusting the rotational power being outputted by the engine 10. The throttle valve 17a functions as a rotational power adjusting device that adjusts the rotational power being outputted by the engine 10.

The cylinder head 16 is provided with a spark plug 19. The spark plug 19 causes combustion of a gas mixture of the air and the fuel supplied to the combustion chamber 11. The piston 13 is disposed in the cylinder 12 in a reciprocable manner. The piston 13 reciprocates through combustion of the fuel supplied to the combustion chamber 11. The crankshaft 15 is coupled to the piston 13. The crankshaft 15 rotates in conjunction with a reciprocating motion of the piston 13. That is, the crankshaft 15 converts the reciprocating motion of the piston 13 caused by the combustion to rotational power.

The crankshaft 15 is rotatably provided inside the engine 10. The connecting rod 14 connects the piston 13 and the crankshaft 15. The crankshaft 15 is rotatably supported on the engine 10 with a bearing or the like therebetween. The generator motor 20 is attached to a first end portion 15a of the crankshaft 15. The electrically-driven transmission device 30 is attached to a second end portion 15b of the crankshaft 15.

The engine 10 outputs the rotational power via the crankshaft 15. The rotational power from the crankshaft 15 is transmitted to the rear wheel 3b via the electrically-driven transmission device 30, a driven shaft 34, the clutch 9, and an axle 3c. The vehicle 1 is driven by the rear wheel 3b receiving the rotational power outputted by the engine 10 via the crankshaft 15.

The crankshaft 15 includes a crankshaft rotation speed sensor 15c. The crankshaft rotation speed sensor 15c outputs a signal having a frequency corresponding to the rotation speed of the crankshaft 15. The control device 60 calculates the crankshaft rotation speed based on the signal outputted by the crankshaft rotation speed sensor 15c. Hereinafter, the crankshaft rotation speed is also referred to as the engine rotation speed.

The axle 3c of the rear wheel 3b is provided with a vehicle speed sensor 3d. The vehicle speed sensor 3d outputs a signal having a frequency corresponding to the rotation speed of the axle 3c. The control device 60 calculates the vehicle speed based on the signal outputted by the vehicle speed sensor 3d.

The engine 10 according to the present embodiment is, for example, a single-cylinder four-stroke engine. The engine 10 according to the present embodiment is air-cooled engine. Note that the engine 10 may be a water-cooled engine, and the engine 10 may be a multi-cylinder engine.

The engine 10 has, between four strokes, a high-load region where the load for the rotation of the crankshaft 15 is high and a low-load region where the load for the rotation of the crankshaft 15 is lower than in the high-load region. The low-load region is larger than the high-load region when referenced to the rotation angle of the crankshaft 15. More specifically, the engine 10 rotates forward while repeating the following four strokes: an intake stroke, a compression stroke, an expansion stroke, and an exhaust stroke. The compression stroke is included in the high-load region and is not included in the low-load region.

The generator motor 20 is a three-phase brushless motor of permanent magnet type. The generator motor 20 also functions as a three-phase brushless generator of permanent magnet type. The generator motor 20 includes a rotor 21 and a stator 22. The generator motor 20 according to the present embodiment is of radial gap type. The generator motor 20 is of outer rotor type. That is, the rotor 21 is an outer rotor. The stator 22 is an inner stator.

The rotor 21 is, for example, made of a ferromagnetic material. The rotor 21 includes a cylindrical boss portion 21a, a disk-shaped bottom wall portion 21b, and a back yoke portion 21c having a cylindrical shape. The bottom wall portion 21b and the back yoke portion 21c are integrally formed. The bottom wall portion 21b and the back yoke portion 21c are secured to the crankshaft 15 via the cylindrical boss portion 21a. The rotor 21 is not provided with a winding to which a current is supplied.

The rotor 21 includes a plurality of permanent magnet portions 21d. The plurality of permanent magnet portions 21d are provided on an inner circumferential surface of the back yoke portion 21c. The plurality of permanent magnet portions 21d are provided such that N pole and S pole appear alternately with respect to a circumferential direction of the generator motor 20. The plurality of permanent magnet portions 21d are provided around the outside of the stator 22 with respect to a radial direction of the generator motor 20. The back yoke portion 21c is provided around the outside of the plurality of permanent magnet portions 21d with respect to the radial direction.

The stator 22 includes a stator core 22a and multi-phase stator windings 22b. The stator windings 22b are wound around a plurality of teeth arranged at intervals with respect to a circumferential direction of the stator core 22a and integrally extending from the stator core 22a toward radially outside. Each of the stator windings 22b belongs to any of U-phase, V-phase, and W-phase. The stator windings 22b are arranged in the order of U-phase, V-phase, and W-phase, for example.

The rotor 21 includes, on its outer surface, a plurality of detection object parts 23. The plurality of detection object parts 23 are provided for detection of a rotation position of the rotor 21. Magnetic effects are used to detect the plurality of detection object parts 23. The plurality of detection object parts 23 are arranged at intervals with respect to the circumferential direction and provided on the outer surface of the rotor 21. The detection object parts 23 are made of a ferromagnetic material. A rotor position detection device 24 is provided at a position allowed to be opposed to the plurality of detection object parts 23. The rotor position detection device 24 is a device that detects the position of the rotor 21.

The generator motor 20 is connected to the crankshaft 15 of the engine 10. Specifically, the generator motor 20 is connected to the crankshaft 15 such that the rotor 21 rotates at a fixed speed ratio relative to the crankshaft 15.

In the present embodiment, the rotor 21 is attached to the crankshaft 15 without interposition of a power transmission mechanism (such as a belt, a chain, a gear, a speed reducer, or a speed increaser and the like.) The rotor 21 rotates at a speed ratio of 1:1 relative to the crankshaft 15. The generator motor 20 is configured such that the forward rotation of the engine 10 causes forward rotation of the crankshaft 15.

Note that it may be acceptable that the generator motor 20 is attached to the crankshaft 15 with interposition of a power transmission mechanism. However, the generator motor 20 is connected to the crankshaft 15 without interposition of either a speed ratio variable transmission device or a speed ratio variable clutch. That is, the generator motor 20 is connected to the crankshaft 15 without interposition of a device capable of varying the input/output speed ratio.

Note that it is preferable in terms of downsizing and low loss that a rotation axis of the generator motor 20 be substantially coincident with a rotation axis of the crankshaft 15. It is also preferable that the generator motor 20 be attached to the crankshaft 15 without interposition of any power transmission mechanism, like the present embodiment.

For starting the engine 10, the generator motor 20 causes the forward rotation of the crankshaft 15. The generator motor 20 also functions as a vehicle driving motor and assists with a rotation operation of the engine 10 while the engine 10 is in a combustion operation. Furthermore, the generator motor 20 is driven by the engine 10 to generate electric power while the engine 10 is in the combustion operation. That is, the generator motor 20 has the following three functions: a function of starting the engine 10 by causing the forward rotation of the crankshaft 15, a function of assisting with the rotation operation of the engine 10, and a function of generating electric power by being driven by the engine 10.

The generator motor 20 functions as a generator through its forward rotation caused by the crankshaft 15 during at least a portion of a period after the start of the engine 10. That is, when the generator motor 20 functions as a generator, the generator motor 20 does not necessarily have to function as a generator all the time during a period after the start of combustion in the engine 10. The period after the start of combustion in the engine 10 may include a period for the generator motor 20 to function as a generator and a period for the generator motor 20 to function as a vehicle driving motor.

The electrically-driven transmission device 30 is a belt-type continuously variable transmission device. As the electrically-driven transmission device 30, for example, an electro continuously variable transmission (ECVT) is used. The electrically-driven transmission device 30 has a structure in which a belt 33 is stretched between two pullies including a drive pulley (a primary pulley) 31 and an idler pulley (a secondary pulley) 32 each having a groove with a variable width. Driving force is transmitted from the engine 10 to the drive pulley 31 via the crankshaft 15. The thus transmitted driving force is transmitted to the idler pulley 32 via the belt 33. The driving force transmitted to the idler pulley 32 is transmitted to the rear wheel 3b.

The drive pulley 31 includes a movable sheave 31a and a fixed sheave 31b. The movable sheave 31a is movable in an axial direction of the crankshaft 15. The fixed sheave 31b is fixed to the crankshaft 15 and the movement thereof in the axial direction is restricted. The idler pulley 32 also includes a movable sheave 32a and a fixed sheave 32b. The movable sheave 32a is movable in an axial direction of the driven shaft 34. The fixed sheave 32b is fixed to the driven shaft 34 and the movement thereof in the axial direction is restricted. The movable sheave 32a is biased by a spring (not shown) in a direction toward the fixed sheave 32b. The movable sheave 31a and the movable sheave 32a moving in the axial direction change the transmission gear ratio of the electrically-driven transmission device 30. Specifically, the movable sheave 31a moving in the axial direction changes a diameter of a portion of the belt 33 wound around the drive pulley 31. With a change in the diameter of the portion wound around the drive pulley 31, the movable sheave 32a moves in the axial direction along with or against spring force of the spring. As a result, a diameter of a portion of the belt 33 wound around the idler pulley 32 also changes.

As the movable sheave 31a of the drive pulley 31 moves toward the fixed sheave 31b, for example, the entire belt 33 moves upward in FIG. 2. As a result, the diameter of the portion of the belt 33 wound around the drive pulley 31 increases. Meanwhile, the movable sheave 32a of the idler pulley 32 moves away from the fixed sheave 32b. As a result, the diameter of the portion of the belt 33 wound around the idler pulley 32 decreases. Through the above, the transmission gear ratio of the electrically-driven transmission device 30 is reduced. That is, the state of the electrically-driven transmission device 30 changes toward a high-speed running setting (top setting). By contrast, as the movable sheave 31a of the drive pulley 31 moves away from the fixed sheave 31b, the entire belt 33 moves downward in FIG. 2. As a result, the diameter of the portion of the belt 33 wound around the drive pulley 31 decreases. Meanwhile, the movable sheave 32a of the idler pulley 32 moves toward the fixed sheave 32b. As a result, the diameter of the portion of the belt 33 wound around the idler pulley 32 increases. Through the above, the transmission gear ratio of the electrically-driven transmission device 30 is increased. That is, the state of the electrically-driven transmission device 30 changes toward a low-speed running setting (low setting). Through movement of the movable sheave 31a described above, the transmission gear ratio of the electrically-driven transmission device 30 changes between a transmission gear ratio (lowest transmission gear ratio) obtained when the movable sheave 31a is at a minimum distance from the fixed sheave 31b and a transmission gear ratio (highest transmission gear ratio) obtained when the movable sheave 31a is at a maximum distance from the fixed sheave 31b.

The electrically-driven transmission device 30 includes a sheave actuator 35. The sheave actuator 35 includes a motor and the like. The sheave actuator 35 moves the movable sheave 31a in the axial direction of the crankshaft 15. The control device 60 moves the movable sheave 31a in the axial direction by activating the sheave actuator 35. Through the above, the control device 60 controls the transmission gear ratio of the electrically-driven transmission device 30.

The electrically-driven transmission device 30 includes a transmission gear ratio sensor 36. The transmission gear ratio sensor 36 is a sensor for detecting the actual transmission gear ratio of the electrically-driven transmission device 30. The transmission gear ratio sensor 36 is a sheave position sensor that outputs an electrical signal corresponding to a position of the movable sheave 31a to the control device 60. The transmission gear ratio corresponds to the position of the movable sheave 31a. A transmission control part 66 can therefore detect the transmission gear ratio of the electrically-driven transmission device 30 by receiving a signal corresponding to the position of the movable sheave 31a. The transmission gear ratio sensor 36 is, for example, a potentiometer that outputs a signal corresponding to a rotation angle of the motor included in the sheave actuator 35. The control device 60 detects the transmission gear ratio based on the signal outputted by the transmission gear ratio sensor 36.

The driven shaft 34 is coupled to the axle 3c of the rear wheel 3b via the clutch 9. The clutch 9 transmits or blocks the rotation (torque) from the driven shaft 34 to the axle 3c. The clutch 9 is an automatic clutch that connects and disconnects without the need for the rider to operate the clutch. The clutch 9 automatically connects upon the engine rotation speed of the engine 10 exceeding a predetermined value and automatically disconnects upon the engine rotation speed dropping below the predetermined value.

The vehicle 1 includes an inverter 61. The control device 60 controls each part of the vehicle 1 including the inverter 61.

The generator motor 20 and the battery 4 are connected to the inverter 61. The battery 4 supplies and receives a current to and from the generator motor 20. The headlight 7 is also connected to the inverter 61 and the battery 4. The headlight 7, which is an accessory mounted on the vehicle 1, operates while consuming electric power.

The battery 4 is connected to the inverter 61 and the headlight 7. Aline connecting the battery 4 and the inverter 61 is provided with a current and voltage sensor 65. The current and voltage sensor 65 detects a current flowing through the battery 4 and a voltage across the battery 4. On the line connecting the battery 4 and the inverter 61, the current and voltage sensor 65 is disposed between the battery 4 and a junction to the headlight 7.

The inverter 61 includes a plurality of switching parts 611 to 616. The inverter 61 of the present embodiment includes six switching parts 611 to 616. The switching parts 611 to 616 constitute a three-phase bridge inverter. The plurality of switching parts 611 to 616 are connected to the phases (U-phase, V-phase, and W-phase) of the multi-phase stator windings 22b. More specifically, among the plurality of switching parts 611 to 616, every two switching parts that are connected in series constitute a half bridge. Ones of the switching parts 611 to 616 constituting the half bridge of each phase are connected to a corresponding one of the phases (U-phase, V-phase, and W-phase) of the multi-phase stator windings 22b.

The switching parts 611 to 616 selectively allow or block the passing of a current between the battery 4 and the multi-phase stator windings 22b. Specifically, when the generator motor 20 functions as a motor, switching between causing and stopping conduction of the multi-phase stator windings 22b is implemented by an on/off-operation of the switching parts 611 to 616. When the generator motor 20 functions as a generator, switching between allowing and blocking the passing of a current between the battery 4 and each of the stator windings 22b is implemented by an on/off-operation of the switching parts 611 to 616. A voltage and a rectification of a three-phase alternating current outputted by the generator motor 20 are controlled by switching on/off the switching parts 611 to 616 one after another.

Each of the switching parts 611 to 616 has a switching element. The switching element is, for example, a transistor. More specifically, the switching element is an FET (Field Effect Transistor). Note that other than FETs, thyristors and IGBTs (Insulated Gate Bipolar Transistors), for example, may be employed for the switching parts 611 to 616.

Lines connecting the inverter 61 and the stator windings 22b are provided with a current sensor (not shown). The current sensor detects a two-phase current in the generator motor 20.

The control device 60 includes a generator motor control part 62, an engine control part 63, a vehicle integrated control part 64, and the transmission control part 66.

The generator motor control part 62 controls the operation of the generator motor 20 by controlling the on/off-operation of each of the switching parts 611 to 616.

The engine control part 63 includes a throttle valve opening control section 631. The throttle actuator 17b of the throttle body 17, the fuel injector device 18, and the spark plug 19 are connected to the engine control part 63. The engine control part 63 controls the combustion operation of the engine 10 by controlling the spark plug 19, the fuel injector device 18, and the throttle actuator 17b. The engine control part 63 controls the rotational power of the engine 10 by controlling the combustion operation of the engine 10.

The vehicle integrated control part 64 controls the generator motor control part 62, the engine control part 63, and the transmission control part 66 based on a position of the throttle grip 8 and the vehicle speed acquired from the vehicle speed sensor 3d. An electrical signal is transmitted from the throttle grip 8 to the vehicle integrated control part 64. The generator motor control part 62, the engine control part 63, and the vehicle integrated control part 64 control the generator motor 20, and the fuel injector device 18 and the throttle valve 17a of the engine 10 based on the electrical signal from the throttle grip 8. Specifically, the spark plug 19, the fuel injector device 18, and the throttle actuator 17b of the engine 10 are controlled according to accelerating manipulation on the throttle grip 8 by the rider of the vehicle 1. Furthermore, the electric power being supplied from the battery 4 to the generator motor 20 is adjusted.

The transmission control part 66 controls the transmission gear ratio of the electrically-driven transmission device 30 at which the crankshaft power outputted by the engine 10 is transmitted to the rear wheel 3b. That is, the transmission control part 66 controls the transmission gear ratio of the electrically-driven transmission device 30 based on a target transmission gear ratio outputted by the vehicle integrated control part 64.

The vehicle integrated control part 64 controls the generator motor control part 62, the engine control part 63, and the transmission control part 66. The vehicle integrated control part 64 includes a highest target crankshaft power determination section 641, a battery state acquisition section 642, a maximum generator motor power determination section 643, a maximum engine power determination section 644, and a target crankshaft power determination section 645.

The highest target crankshaft power determination section 641 acquires a highest target crankshaft power of the engine unit EU.

Specifically, the highest target crankshaft power determination section 641 acquires the highest target crankshaft power of the engine unit EU based on signals from the throttle sensor 8a and the vehicle speed sensor 3d.

The battery state acquisition section 642 detects the level of charge of the battery 4. Specifically, the battery state acquisition section 642 acquires the voltage value and the current value in the battery 4 based on detection results outputted from the current and voltage sensor 65. For example, the battery state acquisition section 642 acquires the state of charge (SOC) of the battery 4 by integrating the current value.

The maximum generator motor power determination section 643 acquires a maximum producible power of the generator motor 20. Specifically, the maximum generator motor power determination section 643 acquires the maximum producible power of the generator motor 20 based on the state of charge (SOC) of the battery 4 acquired by the battery state acquisition section 642. The maximum generator motor power determination section 643 is not limited to this acquisition method, and may estimate the maximum producible power of the generator motor 20 based on the voltage across the generator motor or the rotation speed.

The maximum engine power determination section 644 acquires a maximum engine power at the current engine rotation speed of the engine 10. Specifically, the maximum engine power determination section 644 acquires the maximum engine power at the current engine rotation speed of the engine 10 acquired based on an electrical signal from the crankshaft rotation speed sensor 15c. The maximum engine power is an engine power that can be outputted by the engine 10 itself at the current engine rotation speed of the engine 10 when the throttle valve 17a of the engine 10 is wide open. The maximum engine power indicates a power output ability of the engine 10 on the assumption that the throttle valve 17a is wide open.

The transmission control part 66 changes the transmission gear ratio of the electrically-driven transmission device 30. Specifically, the vehicle integrated control part 64 determines the target transmission gear ratio of the electrically-driven transmission device 30 based on the highest target crankshaft power of the engine unit EU, the maximum producible power of the generator motor 20, and the maximum engine power at the current engine rotation speed of the engine 10. The transmission control part 66 changes the transmission gear ratio of the electrically-driven transmission device 30 to the target transmission gear ratio determined by the vehicle integrated control part 64 by causing the sheave actuator 35 to operate.

The control device 60 is composed of a computer having a central processing unit, not shown, and a storage device, not shown. The central processing unit executes arithmetic processing based on a control program. The storage device stores therein programs and data relating to arithmetic operations.

The generator motor control part 62, the engine control part 63, the vehicle integrated control part 64, and the transmission control part 66 are implemented by a computer, not shown, and a control program executable by the computer. Thus, below-described operations that are respectively performed by the generator motor control part 62, the engine control part 63, and the transmission control part 66 can be considered as operations of the control device 60. Note that the generator motor control part 62, the engine control part 63, and the transmission control part 66 are electrically connected to one another, and may for example be either configured as separate devices placed at a distance from one another, or integrated as a single device.

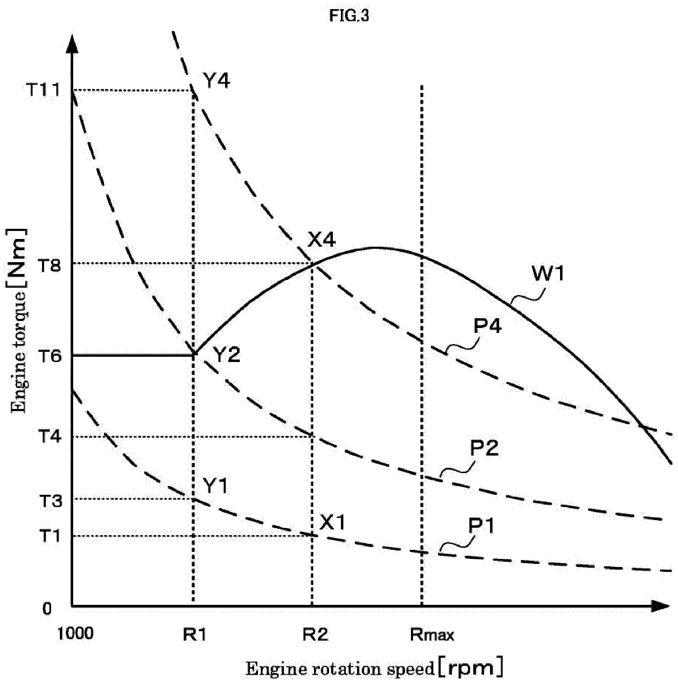

Here, a power margin and a torque margin will be described with reference to FIG. 3. FIG. 3 is a diagram illustrating a relation between the engine rotation speed and the engine torque of the engine unit EU of the present embodiment. Power is proportional to the product of the rotation speed and the torque. A sum of the engine power outputted by the engine 10 and the power outputted by the generator motor 20 is referred to as a crankshaft power. A sum of the engine torque outputted by the engine 10 and the torque outputted by the generator motor 20 is referred to as a crankshaft torque. FIG. 3 shows the engine torque as a component of the crankshaft torque.

The engine power margin means a difference between an engine power at a certain rotation speed with a certain degree of opening of the throttle valve and an engine power producible at the same rotation speed when the throttle valve is wide open. The engine torque margin means a difference between an engine torque at a certain rotation speed with a certain degree of opening of the throttle valve and an engine torque producible at the same rotation speed when the throttle valve is wide open. The engine torque margin and the engine power margin mean a torque and a power by which the engine torque and the engine power can be increased instantly.

For example, as illustrated in FIG. 3, the engine 10 has an engine rotation speed of R2 [rpm] and an engine torque of T1 [Nm] (state X1) when the throttle valve 17a of the engine unit EU has a certain degree of opening. As the throttle valve 17a becomes wide open with the engine rotation speed maintained at R2 [rpm], the engine torque increases up to T8 [Nm] (state X4). The engine torque margin in this case is therefore T8 - T1 [Nm]. The engine power margin in this case is P4 - P1, which is a difference calculated by subtracting P1 (= T1 $\times$ R2 $\times$ $\alpha$) [W] from P4 (= T8 $\times$ R2 $\times$ $\alpha$) [W]. The value of P4 - P1 is (T8 - T1) $\times$ R2 $\times$ $\alpha$ [W] ($\alpha$ is a constant for a value of a correction from [rpm] $\times$ [Nm] to [W]).

Here, the engine power margin of the engine 10 by itself will be described first without taking into account a power assist function of the generator motor 20 of the engine unit EU. Under the same engine condition, or under a constant engine output (power) condition, the engine power margin of the engine 10 by itself varies depending on the engine rotation speed. Under a constant engine output (power) condition, the engine power margin decreases with a decrease in the engine rotation speed at least when the engine rotation speed is less than or equal to a maximum engine output rotation speed Rmax. This is because the engine power producible when the throttle valve is wide open is restricted by a Wide-Open-Throttle (referred to below as WOT) curve W1 in FIG. 3. The WOT curve is a curve representing a relation between the engine rotation speed and the engine torque that can be outputted by the engine itself when the throttle valve of the engine is wide open. In a certain running state (at a certain engine rotation speed), the engine torque does not exceed the WOT curve W1 even if the amount of manipulation of the throttle grip is increased to a maximum level. The WOT curve is a unique characteristic each engine has. The following description describes a case where the engine rotation speed is less than or equal to the maximum engine output rotation speed Rmax.

For example, under a certain engine condition, both the engine power producible when the engine rotation speed is R1 [rpm] and the engine torque is T3 [Nm] (state Y1), and the engine power producible when the engine rotation speed is R2 [rpm] and the engine torque is T1 [Nm] (state X1) are P1 [W] (represented by a dashed line P1 in FIG. 3). The dashed line marked by P1 represents combinations of the rotation speed and the torque that give a power of P1. The dashed line marked by P1 is a line of constant output. Dashed lines marked by P2 and P4 are each a line of constant output in which the power obtained is different from the power P 1. As the throttle valve becomes wide open during the state X1, the engine power increases from P1 to P4 (state X4). By contrast, as the throttle valve 17a becomes wide open during the state Y1, the power outputted by the engine 10 increases to hit a peak at P2 on the WOT curve W1 (state Y2). At the same time, the engine torque hits a peak at T6. Thus, the increase in the engine power of the engine 10 in the state Y1 is not as large as that in the state X1, resulting in a decrease in the responsiveness of the engine power to manipulation of the throttle grip 8.

Accordingly, as a result of the engine power of the engine 10 being transmitted via the electrically-driven transmission device 30, the responsiveness of the driving force also decreases.

This indicates that comparing a condition of a low rotation speed and a high load (a high degree of throttle opening), and a condition of a high rotation speed and a low load (a low degree of throttle opening), the latter of the two conditions results in a greater engine power margin than the former even if the same power is outputted. The engine power that can be instantly outputted in response to opening of the throttle valve is therefore greater under the latter condition than under the former condition. That is, the responsiveness to accelerating manipulation in the case of a low engine rotation speed is not as high as the responsiveness to accelerating manipulation in the case of a high engine rotation speed. Note that the engine power that can be instantly outputted is an engine power that is producible in response to opening of the throttle valve without waiting for the engine rotation speed to increase.

The vehicle 1 according to the present embodiment includes the engine unit EU having a power assist function provided by the generator motor 20. In the vehicle 1 at a low engine rotation speed, electric power is supplied from the battery 4 to the generator motor 20 when the throttle grip 8 is manipulated into a maximum position. With the electric power being supplied from the battery 4 to the generator motor 20, the generator motor 20 assists the engine 10, increasing the crankshaft power. Thus, the acceleration responsiveness of the vehicle 1 to accelerating manipulation by the rider improves. This makes the responsiveness to accelerating manipulation in the case of a low engine rotation speed as reproducible as that in the case of a high engine rotation speed.

As long as the responsiveness to accelerating manipulation is reproducible, it is possible to make clear how much power assist by the generator motor 20 is necessary for the engine when the rider demands maximum power by setting the highest target crankshaft power. The highest target crankshaft power (A) is a target value of the power to be outputted from the crankshaft 15 without waiting for the engine rotation speed to increase when the throttle grip 8 is manipulated into a wide-open-throttle position.

By contrast, a maximum crankshaft power is a sum of the maximum producible power of the generator motor 20 and the engine power that is producible by the engine at the current rotation speed without waiting for the engine rotation speed to increase. The maximum crankshaft power indicates the current abilities of the engine 10 and the generator motor 20. If the highest target crankshaft power (A) is less than or equal to the maximum crankshaft power, at least a power corresponding to the highest target crankshaft power (A) is outputted from the crankshaft 15 when the throttle grip is manipulated into the wide-open-throttle position.

The highest target crankshaft power is set depending on the current vehicle speed of the vehicle and the current position of the throttle grip 8.

The generator motor 20 of the engine unit EU outputs power by receiving electric power supplied from the battery 4. The running assist ability of the generator motor 20 is therefore susceptible to the influence of the charge state of the battery. That is, the maximum producible power of the generator motor 20 is susceptible to the influence of the charge state. If the throttle grip 8 is manipulated into the maximum position but the amount of charge remaining in the battery is small, for example, the battery fails to supply electric power to the generator motor 20, and the generator motor 20 fails to perform sufficient power assist on the engine 10.

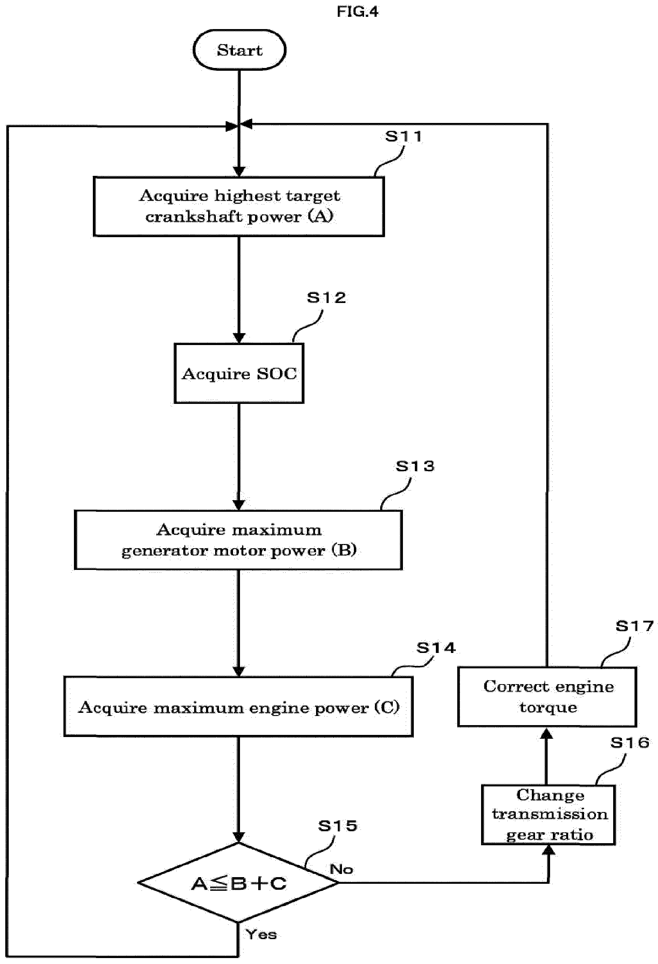

The control device 60 in the vehicle 1 according to the present embodiment performs an operation illustrated in a flowchart shown in FIG. 4 prior to accelerating manipulation (during steady running). Thus, it is possible to give the vehicle reproducible acceleration responsiveness to accelerating manipulation regardless of the charge state of the battery 4.

FIG. 4 is a flowchart for explaining the operation of the control device 60 in the vehicle 1.

The operation illustrated in the flowchart in FIG. 4 is performed while the vehicle is running. First, in step S11, the highest target crankshaft power determination section 641 of the control device 60 acquires the highest target crankshaft power (A) of the engine unit EU. The highest target crankshaft power determination section 641 of the control device 60 computes the highest target crankshaft power (A) based on the vehicle speed acquired from the vehicle speed sensor 3d and the position of the throttle grip 8.

Next, in step S12, the battery state acquisition section 642 of the control device 60 acquires the amount of decrease from the full-charge capacity of the battery 4. Specifically, the battery state acquisition section 642 of the control device 60 acquires, for example, the voltage value and the current value in the battery 4 based on results of the detection outputted from the current and voltage sensor 65. The battery state acquisition section 642 acquires the state of charge (SOC) of the battery 4 by integrating the acquired current value.

Next, in step S13, the maximum generator motor power determination section 643 of the control device 60 acquires the maximum producible power (B) of the generator motor 20 based on the SOC acquired by the battery state acquisition section 642. Specifically, the maximum generator motor power determination section 643 acquires the maximum producible power (B) of the generator motor 20 using a reference table stored in the storage device of the control device 60 and containing a relation between the SOC of the battery 4 and the maximum producible power of the generator motor 20.

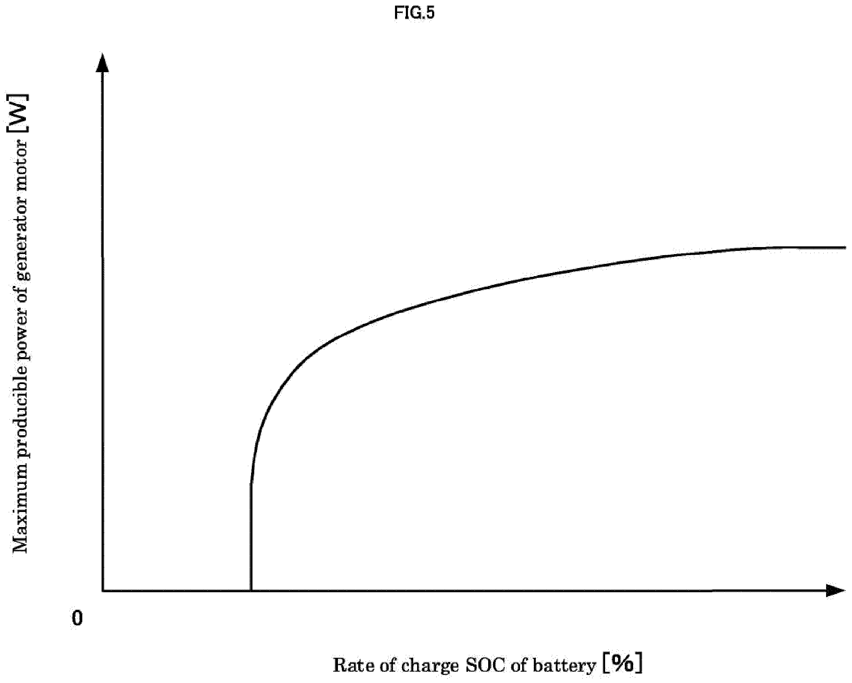

FIG. 5 is a diagram illustrating a relation between the full-charge capacity of the battery and the maximum power producible by the generator motor. The maximum producible power (B) of the generator motor 20 is an upper limit of the power that is producible by the generator motor 20 with the electric power that can be supplied from the battery 4 to the generator motor 20, which is determined based on the SOC acquired in step S12. In a situation where the SOC is low, that is, in a situation where the amount of decrease from the full-charge capacity of the battery 4 is large, the maximum producible power (B) of the generator motor 20 is low.

In some cases, however, the maximum producible power of the motor (generator motor) is affected by voltage, motor temperature, and the like. According to the present embodiment, therefore, the acquisition of the maximum producible power (B) of the generator motor 20 is not limited to calculating the SOC after acquiring the voltage value and the current value in the battery 4. In addition to the calculation of the SOC, for example, the acquisition of the maximum producible power (B) of the generator motor 20 may include correction using a value obtained by measuring the temperature or the like of the battery 4. In this case, the values in the graph shown in FIG. 5 are corrected before use.

In step S14 in FIG. 4, the maximum engine power determination section 644 of the control device 60 acquires a maximum engine power (C) at the current rotation speed of the engine 10. The maximum engine power (C) at the current rotation speed of the engine 10 is a maximum engine power that is producible by the engine 10 without waiting for the rotation speed to increase when the throttle valve 17a is wide open. That is, the maximum engine power (C) indicates the ability of the engine 10 corresponding to the throttle valve 17a wide open. The maximum engine power (C) can be determined from the engine torque corresponding to the current engine rotation speed on the WOT curve W1. Specifically, the maximum engine power determination section 644 acquires the maximum engine power (C) at the current rotation speed of the engine 10 using a reference table stored in the storage device of the control device 60 and containing a relation between the engine rotation speed and the engine torque on the WOT curve W1.

Here, in step S15, the vehicle integrated control part 64 of the control device 60 compares the highest target crankshaft power (A) against the sum of the maximum producible power (B) of the generator motor 20 and the maximum engine power (C) at the current engine rotation speed. In other words, the vehicle integrated control part 64 determines whether or not the highest target crankshaft power (A) of the engine unit EU is obtainable using the engine power of the engine 10 and the power to be outputted by the generator motor 20 when the throttle grip 8 is manipulated into the wide-open-throttle position, for example.

If the power (A) is equal to or lower than the sum of the power (B) and the power (C) (Yes in S15), it is possible for the engine unit EU to instantly output the highest target crankshaft power when the amount of manipulation of the throttle grip 8 is the largest in response to the manipulation of the throttle grip 8 into the wide-open-throttle position.

If the power (A) is determined to be higher than the sum of the power (B) and the power (C) (No in step S15), by contrast, it is impossible for the engine unit EU to instantly output the highest target crankshaft power even if the amount of manipulation of the throttle grip 8 is the largest.

This is a phenomenon that occurs when the SOC of the battery 4 is low, that is, when the maximum producible power (B) of the generator motor 20 is low. The maximum producible power of the generator motor 20 is low when the SOC is low. The generator motor 20 therefore fails to sufficiently assist the engine power of the engine 10 when the amount of manipulation of the throttle grip 8 is the largest, even if the engine 10 outputs the maximum engine power (C).

If the power (A) is determined to be higher than the sum of the power (B) and the power (C) in step S15 (No in step S15), the vehicle integrated control part 64 changes the target transmission gear ratio in step S16. The transmission control part 66 changes the transmission gear ratio of the electrically-driven transmission device 30 depending on the changed target transmission gear ratio.

In step S16, the transmission gear ratio is changed so as to satisfy a formula in step S15.

The transmission gear ratio of the electrically-driven transmission device 30 is changed in step S16 as described below.

First, the vehicle integrated control part 64 determines a difference between the power (A) acquired in step S11 and the power (B) acquired in step S13. The thus acquired value is taken to be a corrected engine power (D). Next, the vehicle integrated control part 64 determines the engine rotation speed corresponding to an intersection point between the WOT curve W1 and a line of constant output representing the corrected engine power (D) in the graph in FIG. 3. The vehicle integrated control part 64 calculates a transmission gear ratio that allows the engine rotation speed of the engine 10 to be an engine rotation speed corresponding to the intersection point between the WOT curve W1 and the line of constant output representing the corrected engine power (D).

The vehicle integrated control part 64 changes the transmission gear ratio of the electrically-driven transmission device 30 to the thus calculated transmission gear ratio. In step S16, the transmission gear ratio is changed to increase compared to a transmission gear ratio to be calculated in a situation where the SOC is a full charge state. That is, the transmission gear ratio is changed to increase the engine rotation speed of the engine 10. The increase in the engine rotation speed increases the maximum producible engine power. That is, the engine power margin increases.

The transmission gear ratio is changed without a change in the degree of the throttle opening in step S16. As a result, the engine power deviates from the target. The engine torque (engine power) is therefore corrected to prevent the engine power from changing before and after the change in the transmission gear ratio in step S16.

In step S17, the engine control part 63 corrects the engine torque (engine power) of the engine 10. Thereafter, the operation returns to step S11.

The operation illustrated in FIG. 4 allows the sum of the maximum engine power of the engine 10 at a rotation speed of the crankshaft 15 at a point in time prior to accelerating manipulation and the maximum producible power (B) of the generator motor 20 depending on the amount of decrease from the full-charge capacity of the battery 4 at the point in time prior to acceleration to be equal to the highest target crankshaft power (A) regardless of the amount of decrease from the full-charge capacity of the battery 4.

Through the operation illustrated in the flowchart in FIG. 4, the control device 60 changes the transmission gear ratio of the electrically-driven transmission device 30 depending at least on the amount of decrease from the full-charge capacity of the battery 4 storing electric power prior to accelerating manipulation by the rider. Upon accelerating manipulation by the rider of the vehicle 1, therefore, the crankshaft power to be outputted from the crankshaft by the engine 10 and, as necessary, the generator motor 20 can be increased to a target power according to the accelerating manipulation by the rider regardless of the amount of charge remaining in the battery 4.

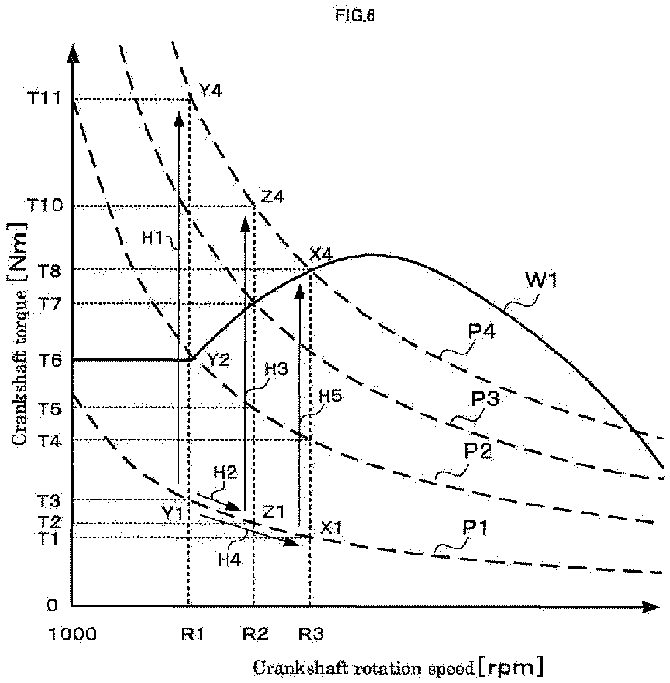

FIG. 6 is a diagram illustrating an example of a relation between the crankshaft rotation speed and the crankshaft torque of the vehicle 1. The operation described with reference to the flowchart in FIG. 4 will be described using the example of the crankshaft rotation speed and the crankshaft torque illustrated in FIG. 6.

In an example, the crankshaft 15 of the vehicle 1 is in the state Y1 in FIG. 6, and the highest target crankshaft power (A) acquired in step S11 (FIG. 4) is P4 [W] (state Y4). Furthermore, the maximum engine power (C) at the current engine rotation speed R1 acquired in step S14 is P2 [W] (T6 [Nm] $\times$ R1 [rpm] $\times$ $\alpha$) (state Y2).

Here, three cases that are different in the SOC will be described. In Case 1, the SOC of the battery 4 is high, and accordingly the maximum producible power (B) of the generator motor 20 is P4 - P2 [W]. In Case 2, the SOC of the battery 4 is slightly lower than in Case 1, and accordingly the maximum producible power (B) of the generator motor 20 is P4 - P3 [W]. In Case 3, the SOC of the battery 4 is very low, and accordingly the maximum producible power (B) of the generator motor 20 is 0 [W].

1. Case 1

In step S15, the vehicle integrated control part 64 determines the sum of the maximum producible power (B) of the generator motor 20 and the maximum engine power (C).

$$B + C = (P4 - P2) \, [W] + P2 \, [W] = P4 \, [W]$$

$$P4 \, [W] = A$$

Therefore, the determination result in step S15 is Yes. Accordingly, the operation does not advance to step S16, and the transmission gear ratio of the electrically-driven transmission device 30 is not changed.

Then, upon the rider manipulating the throttle grip 8 into the maximum position, the power P4 [W] (= A) is outputted as the crankshaft power. That is, the state of the crankshaft 15 of the vehicle 1 can instantly transition from the state Y1 to the state Y4 (see an arrow H1).

2. Case 2

In step S15, the vehicle integrated control part 64 determines the sum of the maximum producible power (B) of the generator motor 20 and the maximum engine power (C).

$$B + C = (P4 - P3) \, [W] + P2 \, [W]$$

$$(P4 - P3) \, [W] + P2 \, [W] < A$$

Therefore, the determination result in step S15 is No. Then, even if the rider manipulates the throttle grip 8 into the maximum position, the engine 10 of the vehicle 1 is unable to instantly transition from the state Y1 to the state Y4. In such a situation, the control advances to step S16 prior to accelerating manipulation, and the transmission gear ratio of the electrically-driven transmission device 30 is changed.

Specifically, since A = P4 [W] and B = P4 - P3 [W], the corrected engine power (D) is A - B = P3 [W]. Meanwhile, the engine rotation speed at an intersection point between a dashed line P3 of constant output and the WOT curve W1 is R2 [rpm]. Accordingly, the transmission gear ratio of the electrically-driven transmission device 30 is changed such that the crankshaft rotation speed becomes R2 [rpm].

Next, in step S17, the vehicle integrated control part 64 of the control device 60 finely adjusts (reduces) the engine torque of the engine 10, so that the engine power of the engine 10 returns to the engine power P1 [W] obtained before the change in the transmission gear ratio of the electrically-driven transmission device 30. That is, the state of the crankshaft 15 of the vehicle 1 transitions from the state Y1 to the state Z1 (see an arrow H2).

The operation returns to step S14, and the maximum engine power (C) at the current engine rotation speed is redetermined. That is, C = P3 [W]. Thereafter, in step S15, the vehicle integrated control part 64 determines the sum of the maximum producible power (B) and the maximum engine power (C).

$$B + C = P4 - P3 \ [W] + P3 \ [W] = P4 \ [W]$$

Since P4 [W] = A, the determination result in step S15 is Yes. Accordingly, the operation does not advance to step S16, and the transmission gear ratio of the electrically-driven transmission device 30 is not changed.

Then, upon the rider manipulating the throttle grip 8 into the maximum position, the power P4 [W] (= A) can be instantly outputted as the crankshaft power. That is, the state of the crankshaft 15 of the vehicle 1 can instantly transition from the state Z1 to the state Z4 (see an arrow H3). That is, the same responsiveness as in Case 1 is reproduced.

3. Case 3

In step S15, the vehicle integrated control part 64 determines the sum of the maximum producible power (B) of the generator motor 20 and the maximum engine power (C).

$$B + C = 0 \ [W] + P2 \ [W] = P2 \ [W]$$

$$P2 \ [W] < A$$

Therefore, the determination result in step S15 is No. Then, even if the rider manipulates the throttle grip into the maximum position, the engine 10 of the vehicle 1 is unable to instantly transition from the state Y1 to the state Y4. In such a situation, the control advances to step S16 prior to accelerating manipulation, and the transmission gear ratio of the electrically-driven transmission device 30 is changed.

Specifically, since A = P4 [W] and B = 0, the corrected engine power (D) = the highest target crankshaft power (A) = P4 [W]. Meanwhile, the engine rotation speed at an intersection point between a dashed line P4 of constant output and the WOT curve W1 is R3 [rpm]. Accordingly, the transmission gear ratio of the electrically-driven transmission device 30 is changed such that the engine rotation speed of the engine 10 becomes R3 [rpm].

Next, in step S17, the vehicle integrated control part 64 of the control device 60 finely adjusts (reduces) the engine torque of the engine 10, so that the engine power of the engine 10 returns to the engine power P1 [W] obtained before the change in the transmission gear ratio of the electrically-driven transmission device 30. That is, the state of the crankshaft 15 of the vehicle 1 transitions from the state Y1 to the state X1 (see an arrow H4).

The operation returns to step S14, and the maximum engine power (C) at the current engine rotation speed is redetermined. That is, C = P4 [W]. Thereafter, in step S15, the vehicle integrated control part 64 determines the sum of the maximum producible power (B) and the maximum engine power (C).

$$B + C = 0 \ [W] + P4 \ [W]$$

$$0 \ [W] + P4 \ [W] = A$$

Therefore, the determination result in step S15 is Yes. Accordingly, the operation does not advance to step S16, and the transmission gear ratio of the electrically-driven transmission device 30 is not changed.

Then, upon the rider manipulating the throttle grip 8 into the maximum position, the power P4 [W] (= A) can be instantly outputted only by the engine 10. That is, the state of the crankshaft 15 of the vehicle 1 can instantly transition from the state X1 to the state X4 (see an arrow H5).

Next, an acceleration instruction from the rider according to the present embodiment will be described.

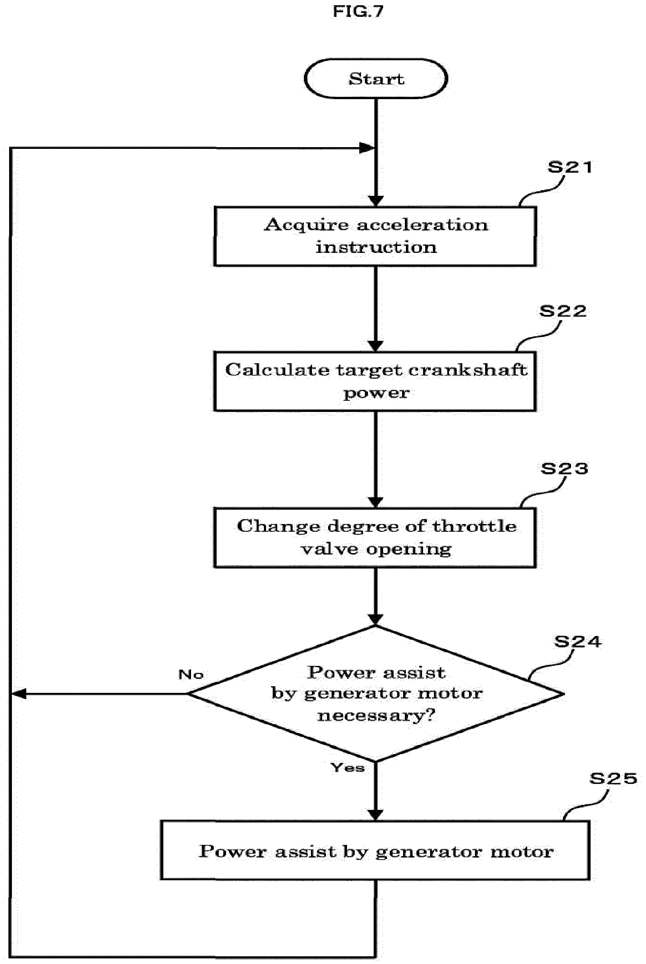

FIG. 7 is a flowchart for explaining an operation of the control device 60 in the vehicle 1 upon an acceleration instruction from the rider.

The operation illustrated in FIG. 7 is performed while the vehicle is running. The operation illustrated in FIG. 7 is performed regardless of whether the throttle grip 8 is in motion or not. First, in step S21, the vehicle integrated control part 64 of the control device 60 receives an instruction from the throttle grip 8. Specifically, position information of the throttle grip 8 is acquired.

In step S22, the vehicle integrated control part 64 calculates a target crankshaft power. The target crankshaft power is a target power from the crankshaft necessary for the acceleration intended by the rider. Specifically, the target crankshaft power is determined depending on the amount of manipulation of the throttle grip 8 by the rider.

In step S23, the vehicle integrated control part 64 determines the degree of opening of the throttle valve 17a. The engine control part 63 changes the degree of opening of the throttle valve 17a depending on the determined degree of opening. Specifically, the engine control part 63 increases or decreases the degree of opening of the throttle valve 17a depending on the target crankshaft power. In a situation where the target crankshaft power is not achievable only with the engine, the operation advances to the next step with the throttle valve wide open.

In step S24, the vehicle integrated control part 64 determines whether or not the power assist by the generator motor 20 is necessary. Specifically, the engine control part 63 determines whether or not the target crankshaft power is greater than the maximum engine power.

If the engine control part 63 determines that the target crankshaft power is greater than the maximum engine power in step S24 (Yes in S24), the generator motor control part 62 of the control device 60 causes the generator motor 20 to perform the power assist in step S25. That is, when the power assist by the generator motor 20 is used, the engine control part 63 keeps the throttle valve 17a wide open, and the generator motor control part 62 causes the generator motor 20 to perform the power assist. Specifically, the generator motor control part 62 causes electric power in an amount necessary for achieving the target crankshaft power to be supplied from the battery 4 to the generator motor 20. This is because only keeping the throttle valve 17a of the engine 10 wide open is not enough for the engine to output the target engine power in a situation where the target crankshaft power is greater than the maximum engine power. In such a situation, the power assist by the generator motor 20 is necessary.

If the target crankshaft torque is not determined to be greater than the maximum engine torque in step S24 (NO in S24), the operation returns to step S21. Then, the generator motor 20 does not perform the power assist. This is because the engine unit EU is able to output the target crankshaft power only with the engine 10 by only increasing opening of the throttle valve 17a of the engine 10 as long as the target crankshaft power is not greater than the maximum engine power.

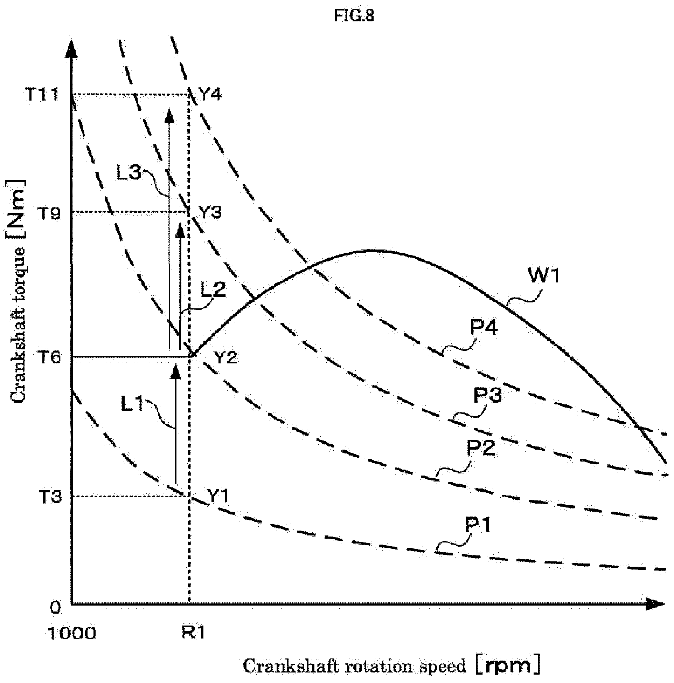

The following describes the operation illustrated in the flowchart in FIG. 7 using actual examples with reference to FIG. 8. FIG. 8 is a diagram illustrating an example of a relation between the crankshaft rotation speed and the crankshaft torque of the vehicle 1.

The acceleration instruction from the rider in step S21 will be described using three cases that are different in the amount of the acceleration instruction. In Case 1, the position of the throttle grip 8 resulting from the manipulation is 40% of the maximum position. In Case 2, the position of the throttle grip 8 resulting from the manipulation is 80% of the maximum position. In Case 3, the position of the throttle grip 8 resulting from the manipulation is 100% of the maximum position.

1. Case 1

In step S21, the rider's acceleration instruction received from the throttle grip 8 is 40% of the maximum position of the throttle grip 8. The engine rotation speed in this case is R1 [rpm]. The vehicle integrated control part 64 of the control device 60 determines that the crankshaft power necessary for the acceleration intended by the rider (target crankshaft power) is, for example, P2 [W] in step S22. The target crankshaft torque in this case is T6 [Nm].

In step S23, the vehicle integrated control part 64 of the control device 60 increases the degree of opening of the throttle valve 17a. Since the current engine rotation speed is R1 [rpm], the engine power increases from P1 to P2 (the state transitions from the state Y1 to the state Y2; see an arrow L1) once the throttle valve 17a is wide open.

The control device 60 compares the target crankshaft power and the maximum engine power in step S24. In Case 1, the target crankshaft power of the engine unit EU is equal to the maximum engine power (P2 [W]). Accordingly, in step S24, the vehicle integrated control part 64 determines that the power assist by the generator motor 20 is not necessary for outputting the target crankshaft torque. Therefore, the generator motor 20 is not caused to perform the power assist, and the operation returns to step S21.

2. Case 2

In step S21, the rider's acceleration instruction received from the throttle grip 8 is 80% of the maximum position of the throttle grip 8. The engine rotation speed in this case is R1 [rpm]. The vehicle integrated control part 64 of the control device 60 determines that the crankshaft power necessary for the acceleration intended by the rider (target crankshaft power) is, for example, P3 [W] in step S22. The target crankshaft torque in this case is T9 [Nm].

In step S23, the vehicle integrated control part 64 of the control device 60 increases the degree of opening of the throttle valve 17a. However, since the current engine rotation speed is R1 [rpm], the engine power only increases up to P2 (the state transitions from the state Y1 to the state Y2; see the arrow L1) even if the throttle valve 17a is wide open.

In step S24, the comparison between the target crankshaft power and the maximum engine power concludes that the target crankshaft power is greater than the maximum engine power. Accordingly, the vehicle integrated control part 64 determines in step S24 that the power assist by the generator motor 20 is necessary for outputting the target crankshaft power.

The control device 60 causes the generator motor 20 to perform the power assist in step S25. Specifically, the generator motor control part 62 of the control device 60 causes electric power in an amount necessary for achieving the target crankshaft power to be supplied from the battery 4 to the generator motor 20. In response, the crankshaft power increases to targeted P3 (the state transitions from the state Y2 to the state Y3; see an arrow L2). Thereafter, the operation returns to step S21.

3. Case 3

In step S21, the rider's acceleration instruction received from the throttle grip 8 is the maximum position (100%) of the throttle grip 8. The engine rotation speed in this case is R1 [rpm]. The vehicle integrated control part 64 of the control device 60 determines that the crankshaft power necessary for the acceleration intended by the rider (target crankshaft power) is, for example, P4 [W] in step S22. The target crankshaft torque in this case is T11 [Nm].

In step S23, the vehicle integrated control part 64 of the control device 60 increases the degree of opening of the throttle valve 17a. However, since the current engine rotation speed is R1 [rpm], the engine power only increases up to P2 (the state transitions from the state Y1 to the state Y2; see the arrow L1) even if the throttle valve 17a is wide open.

In step S24, the comparison between the target crankshaft power and the maximum engine power concludes that the target crankshaft power is greater than the maximum engine power. Accordingly, the vehicle integrated control part 64 determines in step S24 that the power assist by the generator motor 20 is necessary for outputting the target crankshaft power.

The control device 60 causes the generator motor 20 to perform the power assist in step S25. Specifically, the generator motor control part 62 of the control device 60 causes electric power to be supplied from the battery 4 to the generator motor 20. In response, the engine power increases to targeted P4 (the state transitions from the state Y2 to the state Y4; see an arrow L3). Thereafter, the operation returns to step S21.

Through the above, the operation starting from the state Y1 shown in FIG. 8 has been described. However, the operation illustrated in the flowchart in FIG. 7 is applicable to, for example, an operation starting from the state Z1 or X1 shown in FIG. 6.

Upon the rider of the vehicle 1 manipulating the throttle grip 8 as in step S21 in FIG. 7 during the operation in FIG. 4, the crankshaft 15 of the engine unit EU in the present embodiment is able to output a power according to the accelerating manipulation by the rider of the vehicle 1 regardless of the amount of decrease from the full-charge capacity of the battery 4 (S23 to S25 in FIG. 7).

This is because the control device 60 changes the transmission gear ratio of the electrically-driven transmission device 30 depending at least on the amount of decrease from the full-charge capacity of the battery 4 prior to the accelerating manipulation by the rider of the vehicle 1 (S15 to S17 in FIG. 4). Thus, it is possible to increase, in response to the accelerating manipulation by the rider of the vehicle 1, the power being outputted from the crankshaft 15 by the generator motor 20 and/or the engine 10 to the target crankshaft power according to the accelerating manipulation, regardless of the amount of decrease from the full-charge capacity of the battery 4.

The control device 60 constantly controls the transmission gear ratio, for example, so that the power being outputted from the crankshaft 15 by the generator motor 20 and/or the engine 10 can be increased to the highest target crankshaft power according to maximum accelerating manipulation. The control device 60 increases the power margin by changing the transmission gear ratio of the electrically-driven transmission device 30.

As described above, the vehicle 1 has reproducible vehicle acceleration responsiveness to accelerating manipulation regardless of the charge state of the battery 4.

Furthermore, the control device 60 controls the transmission gear ratio of the electrically-driven transmission device 30 so that the sum of the power margin of the engine 10 at a rotation speed of the crankshaft at a point in time prior to accelerating manipulation by the rider of the vehicle 1 and the producible power of the generator motor 20 depending on the amount of decrease from the full-charge capacity of the battery 4 with electric power supplied from the battery 4 to the generator motor 20 at the point in time prior to acceleration is constant with the target value. The target value is determined depending on the degree of opening of the throttle valve 17a and the speed of the vehicle 1 regardless of the amount of decrease from the full-charge capacity of the battery 4.

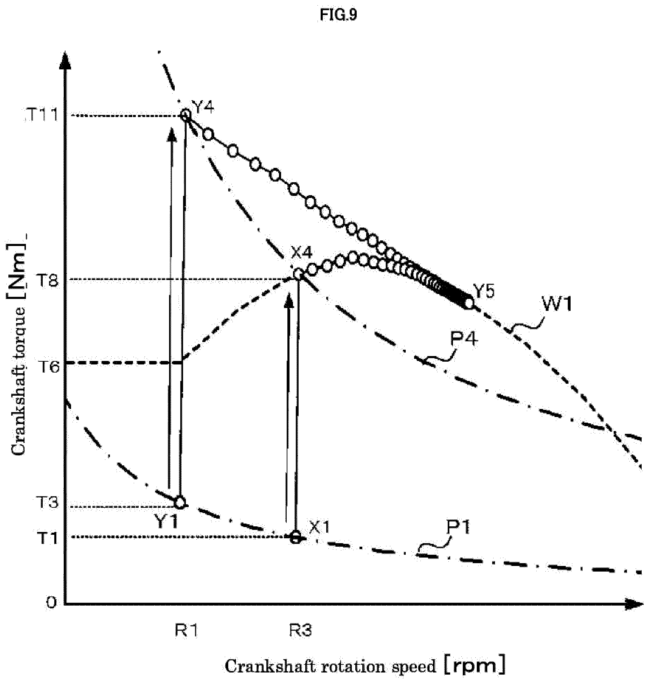

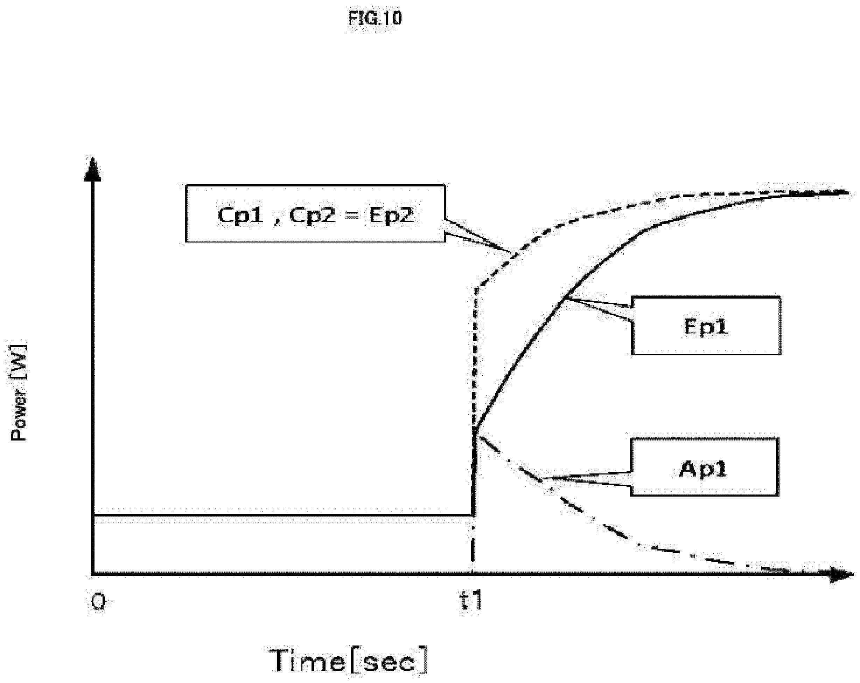

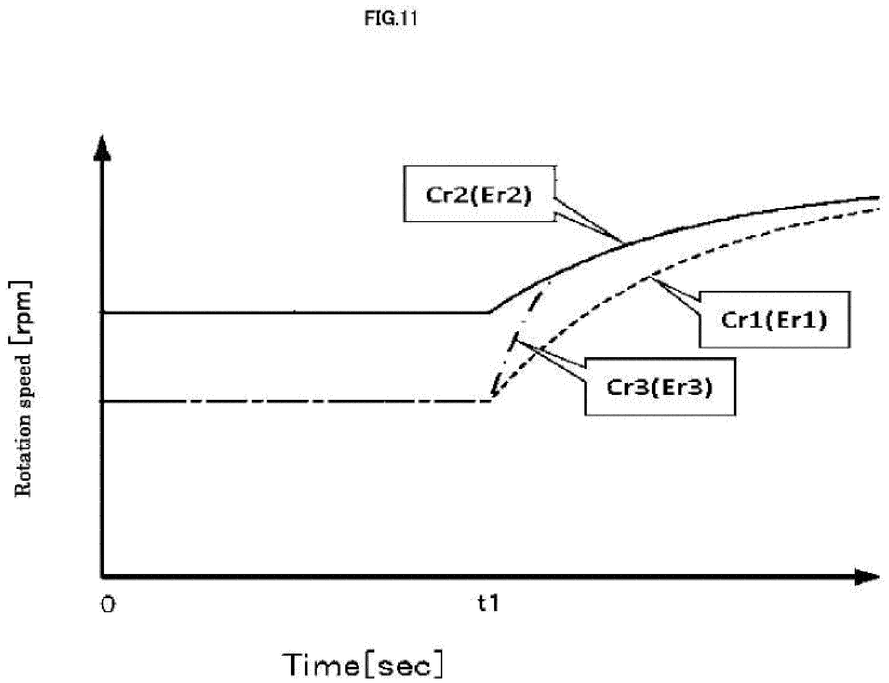

FIG. 9 is a diagram for explaining transitions of the crankshaft rotation speed and the crankshaft torque of the vehicle 1 illustrated in FIG. 1. FIG. 10 is a diagram illustrating a relation between time and the crankshaft power, the engine power, and the generator motor power of the vehicle 1 illustrated in FIG. 1 together with that of a comparative example. FIG. 11 is a diagram illustrating a relation between time and the crankshaft rotation speed of the vehicle 1 illustrated in FIG. 1 together with that of the comparative example.

FIGS. 9, 10, and 11 explain a transition from a steady running state to an accelerated state as a result of the accelerator grip being brought into the wide-open-throttle position under the control according to the present embodiment. FIGS. 9, 10, and 11 illustrate operation examples in two cases that are different in the amount of charge remaining in the battery.

The following first describes a case where the amount of decrease from the full-charge capacity of the battery 4 is small, which in other words is a case where the power assist is to be performed.

For example, an operating point is at Y1 in FIG. 9, which is a steady running point prior to accelerating manipulation. In response to the accelerating manipulation by the rider, a crankshaft torque T11, which is a power resulting from an engine torque (T6 - T3) and a motor torque (T11 - T6), is instantly outputted, whereupon the operating point transitions to Y4. Thereafter, due to an increase in the vehicle speed and gear shifting, the engine rotation speed increases, and the operating point transitions from Y4 toward Y5. The operating point eventually reaches Y5, which is a target point according to the accelerator position and the vehicle speed. The above-described transition of the engine rotation speed with time is represented by Cr1 in FIG. 11. The steady running state is from a time 0 to a time t1 in FIG. 11. The accelerator grip reaches the wide-open-throttle position at the time t1, and then the engine rotation speed increases toward the target rotation speed.

FIG. 10 illustrates transitions of power. The motor power is Ap 1, the engine power is Ep 1, and the crankshaft power is Cp 1.

Note that after t1, the control device 60 controls the motor power depending on the target power and the maximum engine power.

The following subsequently describes a case where the amount of decrease from the full-charge capacity of the battery 4 is large (for example, a case where the SOC is 10%), which in other words is a case where the power assist is unperformable.

As a result of the control flow in FIG. 4 being performed, the transmission gear ratio and the crankshaft rotation speed are increased depending on the amount of decrease from the full-charge capacity, and the steady running point is X1 in FIG. 9. That is, the steady running point is X1 in the case where the amount of decrease from the full-charge capacity of the battery 4 is large, whereas the steady running point is Y1 in the case where the amount of decrease is small.

In response to accelerating manipulation by the rider, the crankshaft torque (= engine torque) instantly increases up to T8, and the operating point transitions to X4. Thereafter, due to an increase in the vehicle speed and gear shifting, the engine rotation speed increases, and the operating point eventually transitions to Y5, which is a target point according to the accelerator position and the vehicle speed. This transition of the engine rotation speed in terms of the time axis is represented by Cr2 in FIG. 11. In the case where the amount of decrease is large, the engine rotation speed Cr2 is already higher than Cr1 in the steady running state from the time 0 to the time t1. As indicated by Cp2 in FIG. 10, the crankshaft power is Cp2 = Ep2 = Cp 1, which means that the crankshaft power does not change even if the amount of charge remaining in the battery changes.

If the crankshaft rotation speed is not increased in a situation where the power assist is unperformable (if Cr1 in FIG. 11 is kept), the crankshaft power is equal to Ep 1 in FIG. 10, and the target crankshaft power at the time t1 is not achieved.

The following now describes, as another comparative example, a type of control to increase the crankshaft power by increasing the crankshaft rotation speed after accelerating manipulation has been performed by the rider in a situation where the power assist is unperformable.

As indicated by Cr3 in FIG. 11, this type of control causes the crankshaft rotation speed to increase faster than Cr1 after the accelerating manipulation without performing the transmission control prior to the accelerating manipulation. The crankshaft rotation speed Cr3 overlaps Cr2 after passage of a period of time following the beginning of the increase of the crankshaft rotation speed.

The crankshaft rotation speed Cr3 cannot be instantly increased upon the accelerating manipulation. That is, the speed of increasing the crankshaft rotation speed Cr3 has a limit. The limit to the speed of increasing the crankshaft rotation speed is, for example, due to sheave speed and the like in the transmission device.

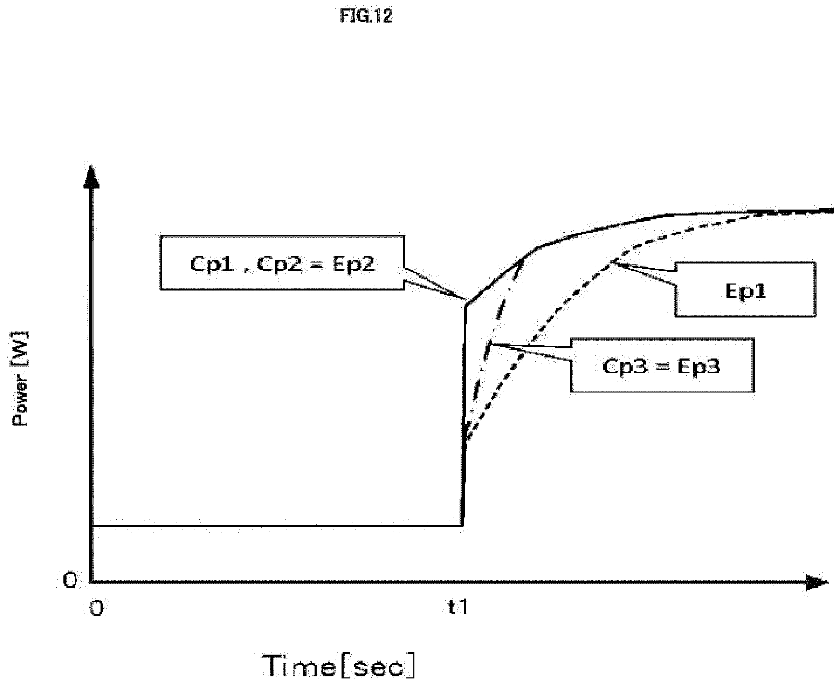

The transmission control after the accelerating manipulation allows the crankshaft rotation speed Cp3 (= Ep3) shown in FIG. 12 to join Cp 1 faster than Ep1. In the case of the transmission control after the accelerating manipulation, however, the target crankshaft power is not achieved in a time region immediately after the start of acceleration.

In the case of control that does not involve the operation of the control device 60 of the present embodiment, such as the first and second comparative examples described above, there is a great lag time between an acceleration instruction from the rider and achievement of increased crankshaft power in a situation where the amount of decrease form the full-charge capacity of the battery 4 is large.

The vehicle 1, which is a straddled vehicle, turning a corner while leaning returns from a leaning state to an upright state by increasing centrifugal force acting on the position of the center of gravity of the vehicle 1 through acceleration. The straddled vehicle is desired to have high responsiveness to accelerating manipulation compared to, for example, an automobile that does not lean toward the center of curvature when turning a corner.

The vehicle 1 according to the present embodiment changes, prior to accelerating manipulation by the rider, the transmission gear ratio of the electrically-driven transmission device 30 depending at least on the amount of decrease from the full-charge capacity of the battery 4. It is therefore possible to increase, in response to the accelerating manipulation by the rider of the vehicle 1, the power being outputted from the crankshaft 15 by the generator motor 20 and/or the engine 10 to the target crankshaft power according to the accelerating manipulation, regardless of the amount of decrease from the full-charge capacity of the battery 4. Thus, reproducible acceleration responsiveness is achieved.

Reference Signs List

| | |
|---|---|
| 1 | Vehicle |
| 2 | Vehicle body |
| 3a | Front wheel |
| 3b | Rear wheel |
| 4 | Battery |
| 5 | Main switch |
| 8 | Throttle grip |
| 10 | Engine |
| 11 | Combustion chamber |
| 12 | Cylinder |
| 13 | Piston |
| 14 | Connecting rod |
| 15 | Crankshaft |
| 16 | Cylinder head |
| 17 | Throttle body |
| 17a | Throttle valve |
| 18 | Fuel injector device |
| 19 | Spark plug |
| 20 | Generator motor |
| 21 | Rotor |
| 22 | Stator |
| 30 | Electrically-driven transmission device |
| 31 | Drive pulley |
| 32 | Idler pulley |
| 33 | Belt |
| 60 | Control device |
| 61 | Inverter |
| 611 to 616 | Switching part |
| 62 | Generator motor control part |
| 63 | Engine control part |
| 64 | Vehicle integrated control part |
| 66 | Transmission control part |
| 65 | Current and voltage sensor |
| EU | Engine unit |

**Claims**

1. A straddled vehicle (1) comprising:

    an engine (10) having a rotatable crankshaft (15) and configured to output power generated through gas combustion as a torque and a rotation speed of the crankshaft (15);

a drive wheel (3b) configured to be driven by the power outputted by the engine (10);

a throttle valve (17a) configured to be controlled to increase a volume of gas being supplied to the engine (10) according to accelerating manipulation by a rider of the straddled vehicle (1);

a generator motor (20) configured to operate in cohesion with the crankshaft (15), generate electric power by being driven by the engine (10), and configured to drive the engine (10) by being supplied with electric power;

a battery (4) configured to store the electric power generated by the generator motor (20) when the generator motor (20) is driven by the engine (10) and configured to supply the generator motor (20) with the electric power stored therein when the engine (10) is driven by the generator motor (20);

an electrically-driven transmission device (30) configured to change the rotation speed of the crankshaft (15) at set transmission gear ratios and configured to transmit the rotation speed to the drive wheel (3b);

a control device (60) configured to control the generator motor (20) and the electrically-driven transmission device (30), **characterized in that**

the control device (60) is configured to change, prior to the accelerating manipulation, the transmission gear ratio of the electrically-driven transmission device (30) depending at least on an amount of decrease in the electric power stored in the battery (4) from a full-charge capacity thereof so as to enable the generator motor (20) driven by the electric power stored in the battery (4) and/or the engine (10) to output, in response to the accelerating manipulation, a target power according to the accelerating manipulation from the crankshaft (15) regardless of an amount of charge remaining in the battery (4).

2. The straddled vehicle (1) according to claim 1, **characterized in that** the control device (60) is configured to increase a power margin by changing, prior to the accelerating manipulation, the transmission gear ratio of the electrically-driven transmission device (30) depending at least on the amount of decrease in the electric power stored in the battery (4) from the full-charge capacity thereof, the power margin being a difference between a power outputted by the engine (10) at a point in time prior to the accelerating manipulation and a maximum power producible by the engine (10) at a rotation speed at that same point in time.

3. The straddled vehicle (1) according to claim 2, **characterized in that** the control device (60) is configured to control, prior to the accelerating manipulation, the transmission gear ratio of the electrically-driven transmission device (30) depending on the amount of decrease in the electric power stored in the battery (4) from the full-charge capacity so that a sum of the power margin of the engine (10) at the rotation speed at the point in time and a power producible by the generator motor (20) depending on the amount of decrease from the full-charge capacity of the battery (4) is constant with a target value set depending on a degree of opening of the throttle valve (17a) and a speed of the straddled vehicle (1).

4. The straddled vehicle (1) according to any one of claims 1 to 3, **characterized in that** the control device (60) is configured to control the electrically-driven transmission device (30) so that an amount of change in the rotation speed of the crankshaft (15) from a point in time of the accelerating manipulation to a point in time when the rotation speed of the crankshaft (15) increases to reach a specific reference speed decreases depending on the amount on decrease in the electric power stored in the battery (4) relative to the full-charge capacity.

**Patentansprüche**

1. Ein Spreiz-Sitz-Fahrzeug (1), das umfasst:

einen Motor (10), der eine drehbare Kurbelwelle (15) hat, und konfiguriert ist, um Leistung abzugeben, die durch Gasverbrennung als ein Drehmoment und eine Drehzahl der Kurbelwelle (15) erzeugt ist;

ein Antriebsrad (3b), das konfiguriert ist, um durch die Leistung, die von dem Motor (10) abgegeben ist, angetrieben zu werden;

ein Drosselventil (17a), das konfiguriert ist, um gesteuert zu werden, um ein Gasvolumen, das dem Motor (10) zugeführt wird, entsprechend einer Beschleunigungsmanipulation durch einen Fahrer des Spreiz-Sitz-Fahrzeugs (1) zu erhöhen;

einen Generator-Motor (20), der konfiguriert ist, um mit der Kurbelwelle (15) zusammenzuarbeiten, erzeugt elektrische Energie, indem er von dem Motor (10) angetrieben wird, und ist konfiguriert, den Motor (10) anzutreiben, indem er mit elektrischer Energie versorgt wird;

eine Batterie (4), die konfiguriert ist, um die elektrische Energie, die von dem Generator-Motor (20) erzeugt ist, zu speichern, wenn der Generator-Motor (20) von dem Motor (10) angetrieben wird, und die konfiguriert ist, um den Generator-Motor (20) mit der darin gespeicherten elektrischen Energie zu versorgen, wenn der Motor (10) von dem Generator-Motor (20) angetrieben wird;

eine elektrisch angetriebene Getriebevorrichtung (30), die konfiguriert ist, um die Drehzahl der Kurbelwelle (15) bei festgelegten Übersetzungsverhältnissen zu ändern, und die konfiguriert ist, um die Drehzahl auf das Antriebsrad (3b) zu übertragen;

eine Steuervorrichtung (60), die konfiguriert ist, um den Generator-Motor (20) und die elektrisch angetriebene Getriebevorrichtung (30) zu steuern, **dadurch gekennzeichnet, dass**

die Steuervorrichtung (60) konfiguriert ist, um, vor der Beschleunigungsmanipulation, das Übersetzungsverhältnis der elektrisch angetriebenen Getriebevorrichtung (30) zumindest in Abhängigkeit von einem Betrag der Abnahme der elektrische Energie, die in der Batterie (4) gespeichert ist, von einer vollen Ladekapazität derselben, zu ändern, um dem Generator-Motor (20), der durch die elektrische Energie, die in der Batterie (4) gespeichert ist, und/oder der Motor (10) angetrieben ist, zu erlauben, als Reaktion auf die Beschleunigungsmanipulation, eine Zielleistung entsprechend der Beschleunigungsmanipulation von der Kurbelwelle (15) abzugeben, unabhängig von einer Ladungsmenge, die in der Batterie (4) verbleibt ist.

2. Das Spreiz-Sitz-Fahrzeug (1) gemäß Anspruch 1, **dadurch gekennzeichnet, dass** die Steuervorrichtung (60) konfiguriert ist, um eine Leistungsspanne zu erhöhen, durch ändern, vor der Beschleunigungsmanipulation, des Übersetzungsverhältnisses der elektrisch angetriebenen Getriebevorrichtung (30), in Abhängigkeit von dem Betrag der Verringerung der elektrischen Energie, die in der Batterie (4) gespeichert ist, von der vollen Ladekapazität derselben, die Leistungsspanne ist eine Differenz zwischen einer Leistung, die von dem Motor (10) zu einem Zeitpunkt vor der Beschleunigungsmanipulation abgegeben ist, und einer Maximal-Leistung, die von dem Motor (10), bei einer Drehzahl zu demselben Zeitpunkt, erzeugbar ist.

3. Das Spreiz-Sitz-Fahrzeug (1) gemäß Anspruch 2, **dadurch gekennzeichnet, dass** die Steuervorrichtung (60) konfiguriert ist, um, vor der Beschleunigungsmanipulation, das Übersetzungsverhältnis der elektrisch angetriebenen Getriebevorrichtung (30), in Abhängigkeit von dem Betrag der Verringerung der elektrischen Energie, die in der Batterie (4) gespeichert ist, von der vollen Ladekapazität derselben, zu steuern, so dass eine Summe der Leistungsspanne des Motors (10) bei der Drehzahl zu dem Zeitpunkt, und einer Leistung, die von dem Generator-Motor (20) erzeugbar ist, in Abhängigkeit von dem Betrag der Verringerung von der vollen Ladekapazität der Batterie (4) konstant ist, mit einem Zielwert, der in Abhängigkeit von einem Öffnungsgrad der Drosselklappe (17a) und einer Geschwindigkeit des Spreiz-Sitz-Fahrzeugs (1) gesetzt ist.

4. Das Spreiz-Sitz-Fahrzeug (1) gemäß irgendeinem der Ansprüche 1 bis 3, **dadurch gekennzeichnet, dass** die Steuervorrichtung (60) konfiguriert ist, um die elektrisch angetriebene Getriebevorrichtung (30) steuern, so dass ein Betrag der Änderung der Drehzahl der Kurbelwelle (15) von einem Zeitpunkt der Beschleunigungsmanipulation bis zu einem Zeitpunkt, an dem die Drehzahl der Kurbelwelle (15), um eine bestimmte Referenzdrehzahl zu erreichen, in Abhängigkeit von dem Betrag der Verringerung der elektrischen Energie, die in der Batterie (4) gespeichert ist, relativ zur vollen Ladekapazität, ansteigt.

## Revendications

1. Véhicule à selle (1) comprenant :

un moteur (10) présentant un vilebrequin mobile en rotation (15) et configuré pour produire une puissance générée via une combustion de gaz en tant que couple et un régime de rotation du vilebrequin (15) ;

une roue motrice (3b) configurée pour être entraînée par la puissance produite par le moteur (10) ;

une soupape de carburateur (17a) configurée pour être commandée pour augmenter un volume de gaz fourni au moteur (10) selon une manipulation d'accélération par un conducteur du véhicule à selle (1) ;

un moteur générateur (20) configuré pour fonctionner en cohésion avec le vilebrequin (15), générer une puissance électrique en étant entraîné par le moteur (10), et configuré pour entraîner le moteur (10) en étant alimenté en puissance électrique ;

une batterie (4) configurée pour stocker la puissance électrique générée par le moteur générateur (20) lorsque le moteur générateur (20) est entraîné par le moteur (10) et configurée pour fournir au moteur générateur (20) la puissance électrique stockée lorsque le moteur (10) est entraîné par le moteur générateur (20) ;

un dispositif de transmission entraîné électriquement (30) configuré pour changer le régime de rotation du vilebrequin (15) à des rapports de démultiplication de transmission définis et configuré pour transmettre le régime de rotation à la roue motrice (3b) ;

un dispositif de commande (60) est configuré pour commander le moteur générateur (20) et le dispositif de transmission entraîné électriquement (30), **caractérisé en ce que**
le dispositif de commande (60) est configuré pour changer, avant la manipulation d'accélération, le rapport de démultiplication de transmission du dispositif de transmission entraîné électriquement (30) selon au moins une quantité de diminution dans la puissance électrique stockée dans la batterie (4) en partant d'une capacité de pleine charge de celle-ci de sorte à permettre au moteur générateur (20) entraîné par la puissance électrique stockée dans la batterie (4) et/ou au moteur (10) de produire, en réaction à la manipulation d'accélération, une puissance cible selon la manipulation d'accélération depuis le vilebrequin (15) quelle que soit une quantité de charge restante dans la batterie (4).

2. Le véhicule à selle (1) selon la revendication 1, **caractérisé en ce que** le dispositif de commande (60) est configuré pour augmenter une marge de puissance en changeant, avant la manipulation d'accélération, le rapport de démultiplication de transmission du dispositif de transmission entraîné électriquement (30) selon au moins la quantité de diminution dans la puissance électrique stockée dans la batterie (4) en partant de la capacité de pleine charge de celle-ci, la marge de puissance consistant en une différence entre une puissance produite par le moteur (10) à un point dans le temps avant la manipulation d'accélération et une puissance maximale productible par le moteur (10) à un régime de rotation au même point dans le temps.

3. Le véhicule à selle (1) selon la revendication 2, **caractérisé en ce que** le dispositif de commande (60) est configuré pour commander, avant la manipulation d'accélération, le rapport de démultiplication de transmission du dispositif de transmission entraîné électriquement (30) selon la quantité de diminution dans la puissance électrique stockée dans la batterie (4) en partant de la capacité de pleine charge de sorte qu'une somme de la marge de puissance du moteur (10) au régime de rotation au point dans le temps et d'une puissance productible par le moteur générateur (20) selon la quantité de diminution en partant de la capacité de pleine charge de la batterie (4) est constante avec une valeur cible définie selon un degré d'ouverture de la soupape de carburateur (17a) et une vitesse du véhicule à selle (1).

4. Le véhicule à selle (1) selon l'une quelconque des revendications 1 à 3, **caractérisé en ce que** le dispositif de commande (60) est configuré pour commander le dispositif de transmission entraîné électriquement (30) de sorte qu'une quantité de changement dans le régime de rotation du vilebrequin (15) d'un point dans le temps de la manipulation d'accélération à un point dans le temps où le régime de rotation du vilebrequin (15) augmente pour atteindre un régime de référence spécifique diminue selon la quantité de diminution dans la puissance électrique stockée dans la batterie (4) par rapport à la capacité de pleine charge.

FIG.1

(a)

(b)

Start

Acquire highest target crankshaft power (A) — S11

Acquire SOC — S12

Acquire maximum producible generator motor power (B) — S13

Acquire maximum engine power (C) — S14

$A \leqq B+C$ — S15

No →

Change transmission gear ratio — S16

Correct engine torque — S17

Yes

(c)

Start

Acquire acceleration instruction — S21

Calculate target crankshaft power — S22

Change degree of throttle valve opening — S23

Power assist by generator motor necessary? — S24

No →

Yes ↓

Power assist by generator motor — S25

24

FIG.2

FIG.3

FIG.4

```
                    ┌─────────┐
                    │  Start  │
                    └────┬────┘
                         │
         ┌───────────────┼──────────────────────────────┐
         │               ▼                         S11   │
         │      ┌──────────────────────┐                 │
         │      │ Acquire highest target│                │
         │      │ crankshaft power (A)  │                │
         │      └──────────┬───────────┘                 │
         │                 │              S12             │
         │                 ▼                              │
         │          ┌─────────────┐                       │
         │          │ Acquire SOC │                       │
         │          └──────┬──────┘                       │
         │                 │                    S13       │
         │                 ▼                              │
         │      ┌──────────────────────┐                  │
         │      │ Acquire maximum      │                  │
         │      │ generator motor power (B)│              │
         │      └──────────┬───────────┘                  │
         │                 │                    S14       │
         │                 ▼                              S17
         │   ┌──────────────────────────┐      ┌──────────────┐
         │   │ Acquire maximum engine   │      │ Correct engine│
         │   │ power (C)                │      │   torque      │
         │   └──────────┬───────────────┘      └──────▲───────┘
         │              │              S15                │ S16
         │              ▼                         ┌───────────────┐
         │          ╱─────────╲      No           │ Change        │
         │         ╱  A≦B+C     ╲─────────────────▶│ transmission │
         │         ╲           ╱                   │ gear ratio   │
         │          ╲─────────╱                    └───────────────┘
         │              │ Yes
         └──────────────┘
```

FIG.5

Maximum producible power of generator motor [W]

Rate of charge SOC of battery [%]

0

28

FIG.6

Crankshaft rotation speed [rpm]

Crankshaft torque [Nm]

W1, P1, P2, P3, P4, X1, X4, Y1, Y2, Y4, Z1, Z4, H1, H2, H3, H4, H5, R1, R2, R3, T1, T2, T3, T4, T5, T6, T7, T8, T10, T11, 1000, 0

## FIG.7

```
          ┌─────────────┐
          │    Start    │
          └─────────────┘
                 │
                 │◄───────────────────────┐
                 ▼                         │
     ┌───────────────────────┐  S21        │
     │ Acquire acceleration  │             │
     │     instruction       │             │
     └───────────────────────┘             │
                 │                          │
                 ▼                          │
     ┌───────────────────────┐  S22         │
     │ Calculate target      │              │
     │ crankshaft power      │              │
     └───────────────────────┘              │
                 │                           │
                 ▼                           │
     ┌───────────────────────┐  S23          │
     │ Change degree of      │               │
     │ throttle valve        │               │
     │ opening               │               │
     └───────────────────────┘               │
                 │                            │
                 ▼            S24              │
          ╱───────────────╲                   │
    No   ╱  Power assist    ╲                  │
    ◄───┤  by generator      ├─────────────────┘
         ╲  motor           ╱
          ╲ necessary?    ╱
           ╲────────────╱
                 │ Yes
                 ▼
     ┌────────────────────────────────┐  S25
     │ Power assist by generator motor│
     └────────────────────────────────┘
```

30

EP 3 842 302 B1

FIG.8

31

FIG.9

FIG.10

Cp1 , Cp2 = Ep2

Ep1

Ap1

Power [W]

0

t1

Time[sec]

FIG.11

FIG.12

EP 3 842 302 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017135315 A1
- JP 4270460 B